# EUROPEAN PATENT SPECIFICATION

(11) **EP 1 291 999 B1**
(45) Date of publication and mention of the grant of the patent: **30.01.2013**
(21) Application number: 01919899.3
(22) Date of filing: 12.04.2001
(51) Int. Cl.: H02J 7/02, H02J 7/00, H02J 7/34

(54) **ADAPTER FOR BATTERY CHARGER**
ADAPTER FÜR EIN BATTERIELADEGERÄT
ADAPTATEUR POUR CHARGEUR DE BATTERIE

(30) Priority: 13.04.2000 JP 2000112433; 26.02.2001 US 794746
(43) Date of publication of application: 12.03.2003
(73) Proprietor: Makita Corporation, Anjo-shi, Aichi-ken 446-8502 (JP)
(72) Inventor: SAKAKIBARA, Kazuyuki, c/o MAKITA CORPORATION, Anjo-shi, Aichi 446-8502 (JP)
(74) Representative: Kramer - Barske - Schmidtchen
(86) International application number: PCT/JP2001/003141
(87) International publication number: WO 2001/080396

(56) References cited:
- EP-A- 0 469 533
- EP-A- 0 564 149
- EP-A- 1 128 517
- DE-A- 4 231 970
- JP-A- 5 326 028
- JP-A- 6 233 472
- JP-A- 8 103 029
- JP-A- 8 161 090
- JP-A- 11 069 617
- US-A- 5 280 229
- US-A- 5 592 064
- US-A- 5 656 917
- US-A- 5 742 149
- US-A- 5 822 427
- US-A- 5 926 005
- US-A- 6 160 378
- PATENT ABSTRACTS OF JAPAN vol. 014, no. 368 (E-0962), 9 August 1990 (1990-08-09) & JP 02 132776 A (JAPAN RADIO CO LTD), 22 May 1990 (1990-05-22)

## Description

The present invention relates to adapters that are utilized by connecting to battery chargers for secondary batteries.

Various types of cableless appliances that are powered by rechargeable batteries (secondary batteries), which can be repeatedly charged and discharged, have been widely utilized. Examples of such appliances are cableless devices, such as cordless (in the present specification, the term "cordless" is interchangeable with the term "cableless") power drills and cordless power saws. Other examples of such appliances are cableless home-use appliances, such as cableless electric vacuum cleaners. Techniques for rapidly charging the secondary batteries by supplying a large current from a battery charger have become prevalent as well.

If two battery packs are used, the first battery pack can be rapidly recharged while the second battery pack is being used to drive the cableless appliance. Therefore, by repeatedly substituting one battery pack for the other battery pack, the cableless appliance can be continuously driven.

However, rapid recharging of the first battery pack must be completed while the second battery pack is still driving the cableless appliance. If not, e.g., if the user has not brought two rechargeable battery packs to the work area, the cableless appliance cannot be used after the first battery pack runs out of power. Even if the user has a battery charger available, the cableless appliance can not be driven until the discharged battery pack has been recharged.

EP 0 469 533 discloses an adapter for selectively connecting an external battery to a battery charger or a portable computer. The adapter consists of four terminals for connection to either the battery charger or the portable computer, a battery connector for connection to the external battery and set of diodes disposed between the terminals and the connector for respectively checking the flow of current to and from the external battery.

EP 0 564 149 A2 discloses a storage capacitor power supply for supplying electric power to a load, such as an electric automobile engine. The power supply includes a capacitor block consisting of a plurality of capacitors, a charging circuit for charging the capacitor block, a charging power supply connected with the capacitor block and a charge-limiting circuit.

It is an object of the present invention to overcome the above-described problems in the known art, and more specifically to provide an adapter capable of supplying driving power to an appliance from a battery charger via a cable (power line).

This object is achieved by the invention of claim 1.

Thus, the invention of claim 1 enables, e.g., continuous use of a normally battery-operated appliance, even after power from a battery pack has been exhausted, without waiting until the battery pack has been recharged.

Additional developments of the invention are recited in the dependent claims.

As is known in the art, a battery charger supplies a charging voltage to a battery pack during a recharging operation. This charging voltage is substantially equal to the voltage that the battery pack supplies to the appliance during operation. Thus, when the battery pack runs out of power, it would seem to be possible to drive the appliance by directly supplying the charging voltage from the battery charger to the appliance.

However, if a 300-watt cableless appliance is, e.g., used and if the appliance is driven at 100 volts, the driving current is 3 amperes. Such a small current can flow though an ordinary cable. On the other hand, if the voltage of the battery pack is 10 volts, a driving current of 30 amperes is required. In other words, in order to directly drive the appliance by coupling the battery charger to the appliance, a relatively large current must flow though the cable. However, because the heat that is generated in the cable is proportional to the square of the current, such a large current of 30 amperes is not permitted to flow though an ordinary cable.

That is, if a commercially supplied voltage (e.g., 100 volts) is utilized, the driving current can be supplied via an ordinary cable; however, if a low voltage (e.g., 10 volts) is utilized, the driving current cannot be supplied via an ordinary cable.

For the above-described reason, the battery charger can not be directly coupled to the appliance via a cable in order to drive the appliance. Accordingly, improvements must be made in order to overcome such a problem.

The present invention provides a new type of adapter that was developed in order to overcome this problem. The adapter comprises a charger-side adapter portion, which is coupled to the battery charger, an appliance-side adapter portion, which is coupled to the appliance, and a power line (cable), which couples the charger-side adapter to the appliance-side adapter.

The appliance-side adapter portion contains a capacitor (not only a condenser but also any type of electric power storing device such as a rechargeable battery) so that a large current (e.g., 30 amperes as was described in the above example) can be supplied to the appliance when the appliance is driven. The charger-side adapter portion receives the charging power supplied by the battery charger and charges the capacitor of the appliance-side adapter portion. The charging current is less than the driving current of the appliance and, therefore, is permitted to flow though an ordinary cable.

For instance, when screws are tightened using a power screwdriver, each screw is required to be positioned before being tightened. In this case, the power screwdriver is intermittently driven even though a series of actions are involved. If the power screwdriver is driven for 2 seconds in order to tighten each screw and if 8 seconds are required between consecutive tightening operations, 10 seconds can be utilized in order to accumulate sufficient power in the capacitor so as to supply 30 amperes for 2 seconds. Thus, the current flowing though the cable can be reduced to one fifth of the total required current. That is, by continuously supplying 6 amperes to the capacitor, 30 amperes can be supplied from the adapter to the appliance for 2 seconds out of every 10 seconds.

By utilizing this adapter, a relatively small current may continuously flow though the cable and accumulate in the capacitor. Thus, a relatively large current can be supplied to the appliance from the adapter in order to drive the appliance.

A condenser is preferably utilized as the capacitor that is disposed within the appliance-side adapter. Because condensers have a long usable life, power can be supplied to the appliance over a long period of time.

In addition, a controller for the battery charger is incorporated into the charger-side adapter portion. For instance, the controller may operate such that when the capacitor is fully charged, the supply of the charging power from the charger to the adapter is stopped, or such that the charging voltage supplied from the charger to the adapter is adjusted to the voltage that the appliance requires.

A memory that stores a program can also included within the charger-side adapter portion. By actuating a CPU within the charger, the program stored in the charger-side adapter portion has priority over a program that is stored in a memory contained in the charger. In the alternative, the charger-side adapter CPU has priority over the charger CPU for controlling the electronic components disposed within the charger.

In either case, the adapter controls the charger.

Known chargers are specifically designed to charge secondary batteries. However, the functions of known chargers have not been fully utilized. For instance, as was described above, by directly supplying the charging current to the appliance via the adapter, the appliance can be continuously operated without waiting for the batteries to be recharged; however, such function was not utilized until the present adapters. Known chargers were only designed to charge batteries and were not capable of driving appliances.

By developing the capabilities of the chargers in order to supply driving power, it would be possible to use the chargers as a power source for various types of DC-powered equipment, such as a light that illuminates a workshop, or a container that heats and cools a beverage for the user. In addition, it is not uncommon for chargers and battery packs to be stolen while the charger is charging a battery pack at a workshop. By utilizing the driving power that is supplied by the chargers, anti-theft devices could also be realized.

However, known chargers are only designed for use as secondary-battery chargers. No attempts have been made as of yet in order to expand the usability of the chargers by making the maximum use of the functions of the chargers.

In addition, the present invention provides an adapter that utilizes the capabilities of the charger in a variety of ways. The adapter also includes a controller, which controls the charger so as to supply the required power for an appliance other than a battery pack, such as a lamp, heater, cooler, or anti-theft device.

The appliance (i.e., lamp, heater, cooler, or anti-theft device) may be coupled to the adapter.

The adapter preferably contains a reader adapted to read data that identifies the appliance, which will be coupled to the adapter. For example, if the lamp is coupled to the adapter, information concerning the lamp is preferably input to the adapter; if the heater is coupled to the adapter, information concerning the heater is preferably input to the adapter.

Further, the controller of the adapter preferably controls the charger in accordance with parameters stored in the appliance. If the lamp is coupled to the charger, sufficient power is preferably supplied in order to illuminate the lamp. If the heater is coupled to the charger, sufficient power is preferably supplied in order to drive the heater.

In addition, the adapter is preferably capable of reading parameters stored in the charger. In this case, if the heater is coupled to the adapter in order to heat a beverage, power that is supplied to the heater can be accurately controlled in accordance with the capability of the charger.

Known chargers lack flexibility. Generally, known chargers can charge only a limited number of battery types. Even if a charger is available, batteries often can not be charged, because the charger does not match the battery type. Charging methodologies greatly influence the usable life of the battery. Whereas some users may require rapid charging, which may shorten the battery life, others may not. Known chargers cannot cope with such a variety of situations, and instead provide homogenized charging currents.

In addition, the present adapter also may be utilized to overcome this lack of flexibility. Preferably, the adapter enables a charger to charge even a new type battery, which was developed after the charger and was not designed to be charged by the charger. The adapter preferably allows a user, who does not require rapid charging, to utilize a slow charging operation, which will maximize the usable life of the battery. The adapter also preferably enables extremely rapid charging, in which two chargers are utilized at the same time to charge one battery pack. Accordingly, the capabilities of the chargers can be greatly increased by the present adapters.

In one aspect of the present teachings, an adapter is taught that preferably contains a memory storing a program. When a charger CPU is initiated, this program has priority over a program stored in a memory disposed within the charger. Further, this adapter preferably includes a device that reads out data, e.g., concerning the type of appliance coupled to the adapter. The program for actuating the charger CPU is preferably selected or corrected based upon the read data.

In another aspect of the present teachings, the CPU of the adapter has priority over a CPU disposed within the charger for controlling the electronic components disposed within the charger. The adapter CPU preferably has priority over the charger CPU in various ways. For instance, the charger CPU may control the charger by reading a control signal from the adapter CPU. In the alternative, the adapter CPU may directly control the electronic components in the charger by bypassing the charger CPU. Or, the charger may be controlled by exchanging data between the adapter CPU and the charger CPU. Data can be preferably exchanged via radio communication between the adapter CPU and the charger CPU.

Detailed representative examples of the present teachings will be described below. However, this detailed description is merely intended to teach a person of skill in the art further details for practicing preferred aspects of the present teachings and is not intended to limit the scope of the invention. Only the claims define the scope of the claimed invention.
Fig. 1 shows a first representative adapter coupled to a battery charger and an appliance.
Fig. 2(A) is a block diagram that identifies functions performed when the adapter is coupled to the charger.
Fig. 2(B) is a block diagram that identifies functions performed when a battery pack is coupled to the charger.
Fig. 3 is a perspective view showing the external appearance of the charger.
Fig. 4 is a perspective view showing the external appearance of the battery pack.
Fig. 5 is a side view of an appliance coupled to the battery pack.
Fig. 6 is a flowchart that shows process steps performed by a control portion of the adapter.
Fig. 7 is a flowchart that shows process steps performed by a control portion of the charger.
Fig. 8 is an explanatory view of a second representative adapter coupled to the battery charger.
Fig. 9 is a block diagram that identifies functions performed when the adapter is coupled to the charger.
Fig. 10 is a flowchart that shows process steps performed by a control portion of the adapter.
Fig. 11 shows a circuit arrangement for a battery pack coupled to a charger.
Fig. 12 shows a circuit arrangement for an appliance, which contains batteries and which appliance is coupled the charger.
Fig. 13 shows a circuit arrangement for a third representative adapter that is interposed between a charger and a battery pack.
Fig. 14 shows a circuit arrangement for a new type of battery pack that is coupled to the charger.
Fig. 15 shows a circuit arrangement for a modified adapter that is interposed between the charger and another new type battery pack.
Fig. 16 shows a circuit arrangement for another new type of battery pack that is coupled to the charger.
Fig. 17 shows a circuit arrangement for yet another new type of battery pack that is coupled to the charger.
Fig. 18 shows a circuit arrangement for still another new type of battery pack that is coupled to the charger.
Fig. 19 shows a circuit arrangement for a new type of appliance, which contains batteries and which appliance is coupled to the charger.
Fig. 20 shows a circuit arrangement for a modified adapter that is interposed between the charger and a battery pack.
Fig. 21 shows a circuit arrangement for a modified adapter that is interposed between the charger and a battery pack.
Fig. 22 shows a circuit arrangement for a modified adapter that is interposed between the charger and a battery pack.
Fig. 23 shows a circuit arrangement for a modified adapter that is interposed between the charger and an appliance containing batteries.
Fig. 24 shows a circuit arrangement for a modified adapter that is interposed between the charger and an appliance containing batteries.
Fig. 25 shows a circuit arrangement for a modified adapter that is interposed between the charger and an appliance containing batteries.
Fig. 26 shows a circuit arrangement for a modified adapter that is interposed between the charger and a battery pack.
Fig. 27 shows a circuit arrangement for a modified adapter that is interposed between the charger and appliances containing batteries.
Fig. 28 shows a circuit arrangement for a modified adapter that is interposed between the charger and appliances containing batteries.
Fig. 29 shows a circuit arrangement for a modified adapter that is interposed between the charger and an appliance containing batteries.
Fig. 30 shows a circuit arrangement for a modified adapter that is interposed between the charger and the Internet.
Fig. 31 shows a circuit arrangement for a modified adapter that is designed to heat a beverage, which modified adapter is coupled to the charger.
Fig. 32 shows a circuit arrangement for a modified adapter that is capable of cooling a beverage, which modified adapter is coupled to the charger.
Fig. 33 shows a circuit arrangement for a modified adapter that contains an anti-theft device, which modified adapter is interposed between the charger and a battery pack.
Fig. 34 shows a circuit arrangement for a modified adapter that contains a cooling device, which modified adapter is interposed between the charger and a battery pack.
Fig. 35 shows a circuit arrangement for a modified adapter that contains another cooling device, which modified adapter is interposed between the charger and a battery pack.
Fig. 36 shows a circuit arrangement for a modified adapter that contains a heating device, which modified adapter is interposed between the charger and a battery pack.
Fig. 37 shows a circuit arrangement for a modified adapter that contains a battery refresh device, which modified adapter is interposed between the charger and a battery pack.
Fig. 38 shows a circuit arrangement for a modified adapter that is capable of charging two battery packs using only a single charger, which modified adapter is interposed between the charger and the two battery packs.
Fig. 39 shows a circuit arrangement for a modified adapter that is capable of rapidly charging one battery pack using the two chargers, which modified adapter is interposed between the chargers and the battery pack.
Fig. 40 shows a circuit arrangement for a modified adapter that contains a charger inspection device and which modified adapter is coupled to the charger.
Fig. 41 shows a circuit arrangement for a modified adapter that contains a battery refresh device, which modified adapter is interposed between the charger and a battery pack.
Fig. 42 shows a circuit arrangement for a modified adapter that contains a device capable of refreshing two batteries, which modified adapter is interposed between the charger and the two battery packs.
Fig. 43 shows a circuit arrangement for a modified adapter that is capable of charging two different types of battery packs, which modified adapter is interposed between the charger and the two battery packs.
Fig. 44 shows a circuit arrangement for a modified adapter that contains a device capable of refreshing two different types of battery packs, which modified adapter is interposed between the charger and the two battery packs.
Fig. 45 shows a circuit arrangement for a modified adapter that is capable of charging two or more battery packs using two chargers, which modified adapter is interposed between the chargers and the battery packs.
Fig. 46 shows a circuit arrangement for dual communication channels provided between the charger and a battery pack.

### First Embodiment

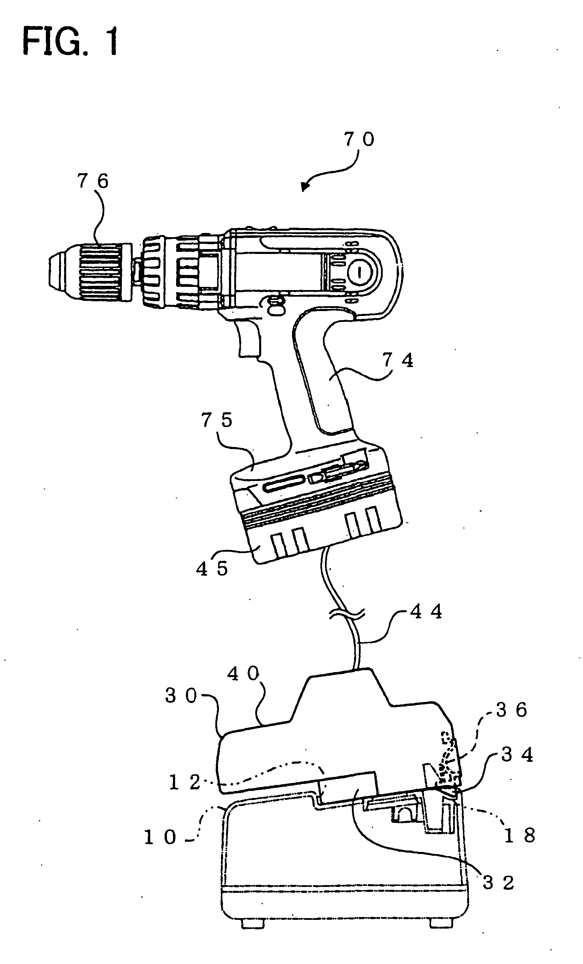

An adapter according to a first embodiment of the invention will be explained below with reference to the drawings. Figure 1 shows appliance 70 (in this embodiment, a cordless power drill is exemplified) coupled to adapter 30 instead of a battery pack, which is usually coupled to appliance 70; the adapter 30 supplies power from the battery charger 10 to drive appliance 70.

Adapter 30 includes charger-side adapter portion 40, which is coupled to battery charger 10, appliance-side adapter portion 45, which is coupled to appliance 70, and cable (power line) 44, which connects the two adapter portions 40, 45.

Hereinafter, charger-side adapter portion 40 and appliance-side adapter portion 45 will be referred to simply as charger-side adapter 40 and appliance-side adapter 45, respectively.

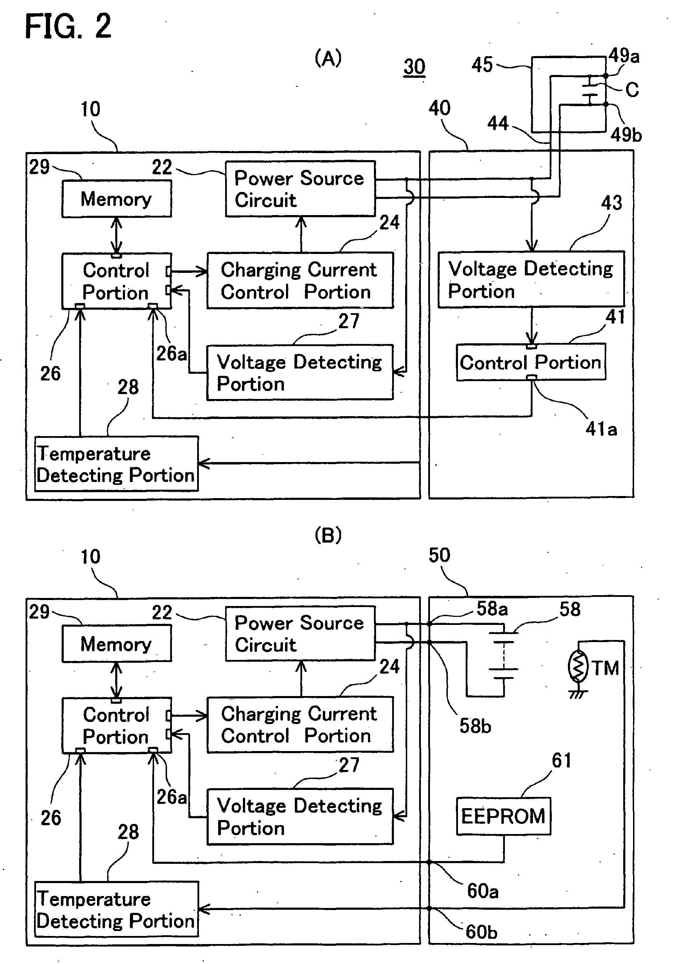

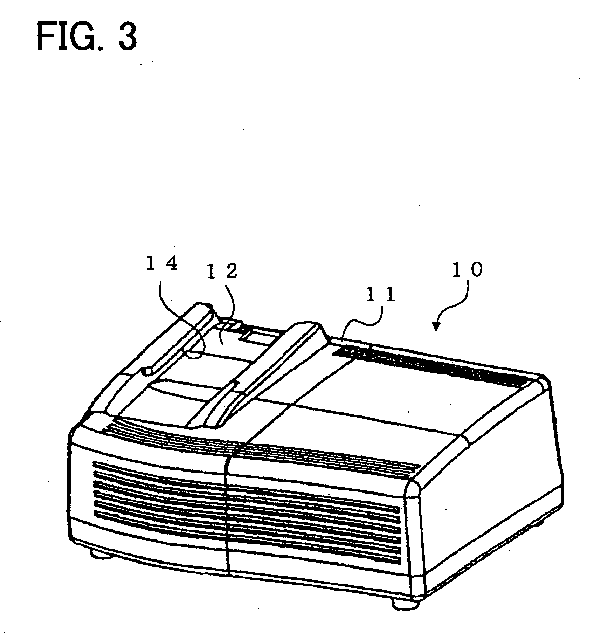

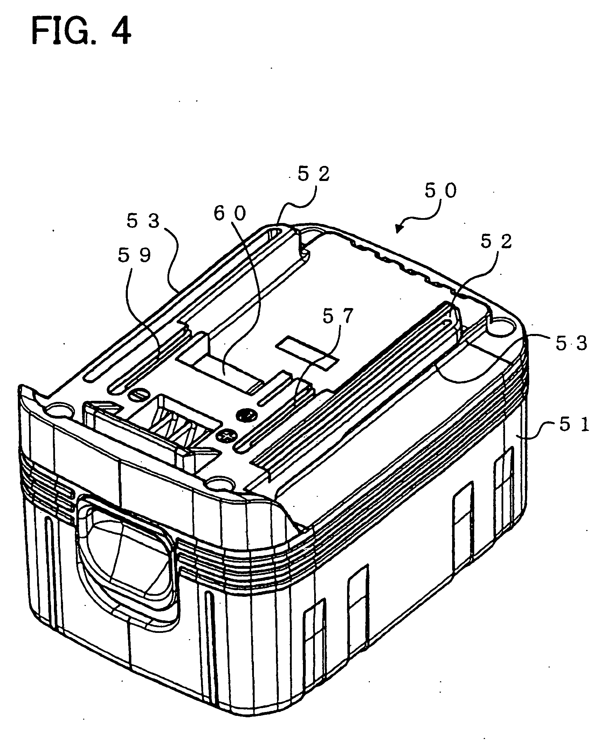

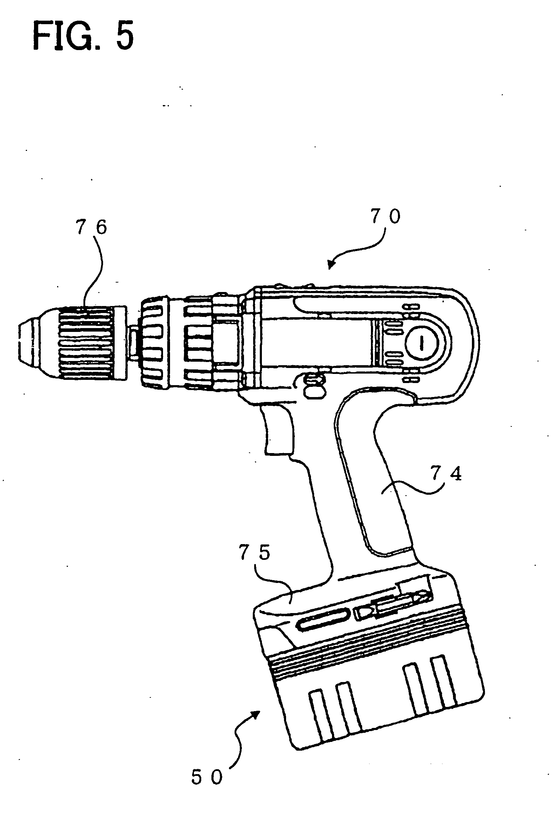

Fig. 2(A) is a block diagram that identifies the functions of battery charger 10 when it is coupled to the adapter 30. Fig. 2(B) is a block diagram that identifies the functions of battery charger 10 when it is coupled to the battery pack 50. Battery charger 10 can be coupled to either adapter 30 or battery pack 50. Fig. 3 shows the external appearance of battery charger 10 and Fig. 4 shows the external appearance of battery pack 50. Fig. 5 shows appliance 70 coupled to battery pack 50.

A design for battery pack 50, which is charged by battery charger 10, will first be explained with reference to Fig. 4. As shown in Fig. 2(B), battery pack 50 includes a plurality of nickel metal hydride batteries 58 that are serially connected within a substantially rectangular-shaped resin housing 51. Battery pack 50 also includes temperature sensor TM, which detects the temperature of batteries 58, and EEPROM 61, which stores information, such as parameters for battery pack 70. Temperature sensor TM includes a thermister having an electrical resistance that varies in accordance with variations in temperature.

As shown in Fig. 4, a pair of engaging portions 52 is formed on an upper side of housing 51 of battery pack 50 and the engaging portions 52 are parallel to each other in a rail-like manner. The pair of engaging portions 52 includes a pair of engaging grooves 53 that engage corresponding portions of appliance 70, or corresponding portions of battery charger 10. Positive terminal groove 57, negative terminal groove 59 and connector 60 are disposed on the upper side of housing 51 between engaging portions 52.

As shown in Fig. 2(B), positive terminal 58a and negative terminal 58b are respectively disposed within positive terminal groove 57 and negative terminal groove 59. When battery pack 50 is attached to appliance 70 or battery charger 10, terminals 58a, 58b contact the incoming terminals or output terminals of appliance 70 or battery charger 10. Terminals 60a, 60b are provided within the interior of connector 60, as shown in Fig. 2(B), in order to connect to temperature sensor TM or EEPROM 61.

In Fig. 5, battery pack 50 is mounted on appliance 70, which is, e.g., a battery-powered drill. Appliance 70 includes battery pack mounting portion 75, which is located below grip (or handle) 74. Charged battery pack 50 is mounted on battery pack mounting portion 75 so that appliance 70 can be used as a cordless battery-powered drill. In this case, battery pack 50 supplies power to appliance 70, which causes the motor (not shown) to rotate chuck 76.

When the batteries are discharged (or depleted), the adapter 30 (as shown in Fig. 1) may be utilized to drive appliance 70. In order to drive appliance 70, appliance-side adapter 45 of adapter 30 (power supply tool) is mounted on battery pack mounting portion 75, as shown in Fig. 1, which battery pack mounting portion 75 is constructed to receive battery pack 50 of Fig. 4. In the connected state shown in Fig. 1, battery charger 10 supplies power to appliance 70 via adapter 30, which causes the motor (not shown) to rotate chuck 76.

A design for battery charger 10 that will permit charging of battery pack 50 or power supply to appliance 70 will now be explained with reference to Figs. 2(A), 2(B), 3 and 11. As shown in Fig. 3, battery charger 10 comprises housing 11 that includes engaging portion 12 onto which battery pack 50 can be mounted. Various indicators (displays), which are not shown, are also provided on housing 11, such as a capacity indicating lamp that indicates the remaining battery capacity of battery pack 50 being discharged and an operation condition indicating lamp that indicates the operating condition of battery charger 10. A control circuit controls the illumination of these indicators and will be further described below.

Engaging portion 12 includes guides 14 that serve to guide engaging grooves 53 of battery pack 50. Engaging portion 12 also includes output terminals that electrically couple to positive terminal 58a and negative terminal 58b of battery pack 50. A terminal is also provided that can be connected to terminal 60a, 60b of the connector 60 of battery pack 50. Thus, the control circuit disposed within battery charger 10 can obtain battery temperature information from battery pack 50 via connector 60.

As shown in Fig. 2(B), the control circuit of battery charger 10 includes the following functional circuits: power source circuit 22, charging-current control portion 24, control portion 26, battery voltage detecting portion 27, battery temperature detecting portion 28 and memory 29. Power source circuit 22 provides a charging current that is suitable for batteries 58 of battery pack 50. During charging, temperature detecting portion 28 detects the temperature of batteries 58 using battery temperature sensor TM. Voltage detecting portion 27 detects battery voltage. Memory 29 stores current control information, such as a map that stores specific values corresponding to appropriate charging currents, which are supplied to batteries 58 in accordance with the rate of battery temperature increase.

Control portion 26 differentiates a temperature value, which was output from temperature detecting portion 28, in order to calculate a temperature increase rate, and then determines the appropriate charging current value based upon the current control information stored in memory 29. Thereafter, control portion 26 outputs the selected charging current value, which serves as a current instruction value, to charging current control portion 24. Charging-current control portion 24 is also capable of controlling power source circuit 22 based upon the current instruction value from control portion 26 so as to adjust the charging current that is supplied to battery pack 50.

Power source circuit 22, charging-current control portion 24, control portion 26, battery voltage detecting portion 27, battery temperature detecting portion 28 and memory 29 are substantially the same as the battery charger described in Japanese Patent Application No. 11-081247, which was filed by the inventor of the present invention. That patent application discloses battery charging techniques involving the detection of the battery temperature of batteries 58 using temperature sensor TM and increasing or decreasing the charging current based upon the detected battery temperature.

When battery pack 50 is mounted on engaging portion 12 of battery charger 10, which may have the above-described structure, control portion 26 utilizes a specific algorithm in order to control power source circuit 22, charging-current control portion 24, voltage detecting portion 27, temperature detection portion 28 and memory 29. As a result, batteries 58 within battery pack 50 are charged. During the charging operation, the capacity indicating lamp is illuminated in order to indicate the battery capacity of battery pack 50. Upon completion of the charging operation, charging is terminated and the same lamp will therefore indicate charge completion. Control portion 26 also includes communication port 26a, which may, e.g., receive charging instructions (described in further detail below) from adapter 30 that may be utilized to control the charging current.

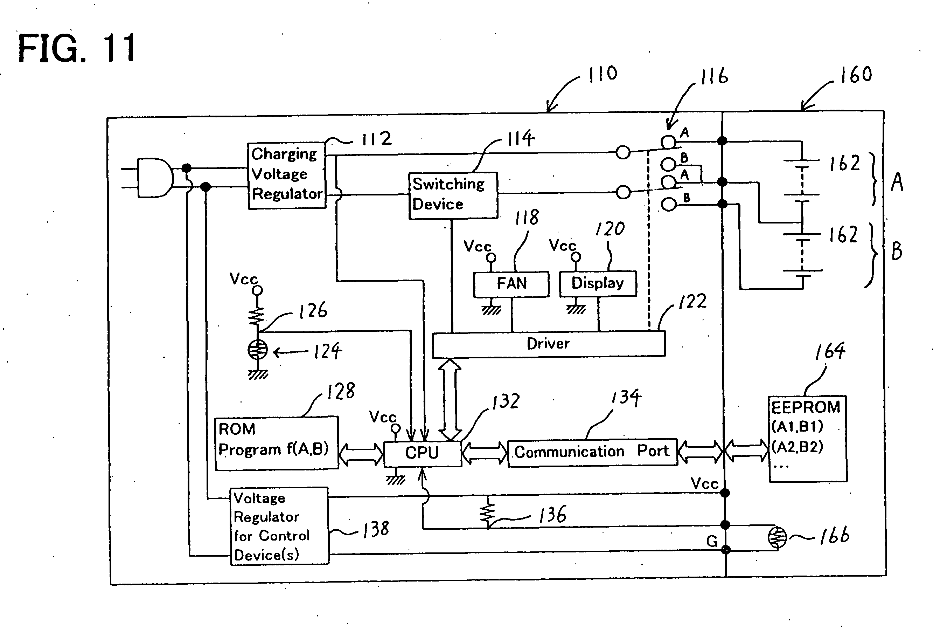

Fig. 11 shows a hardware design for battery charger 110, which is identical to battery charger 10 and which is coupled to battery pack 160.

Battery pack 160 includes a plurality of serially connected batteries 162. The voltage of serially connected batteries 162 is higher than the charging voltage supplied by charger 110. Batteries 162 consist of group A and group B. The voltage of battery group A, the voltage of battery group B and the charging voltage of charger 110 are substantially identical. In other words, the voltage of battery pack 160 is two times greater than the charging voltage supplied by battery charger 110. Battery pack 160 stores several parameters A, B, etc., that are utilized to determine optimal currents for charging the battery pack 160. Parameters A, B, etc., are specific for each type of battery pack. For example, a type-1 battery pack stores parameters A1, B1, etc.; a type-2 battery pack stores parameters A2, B2, etc. Battery pack 160 also includes thermister 166 having a resistance that varies in accordance with variations in temperature. Thermister 166 is disposed adjacent to batteries 162.

Battery charger 110 comprises charging voltage regulator 112, which converts an alternating current into a direct current having a constant voltage. CPU 132 adjusts the regulated voltage output by the charging voltage regulator 112. For instance, the voltage may be regulated at a DC voltage of 12V or 16V. Switching device 114 is coupled to one output side of charging voltage regulator 112 and controls the charging current. Switching device 114 is intermittently turned ON and OFF by CPU 132 and driver circuit 122. A large charging current is supplied when switching device 114 is turned ON for a long time and a low charging current is supplied when switching device 114 is turned ON for a only short time within a fixed period of time.

Switch 116 is used for charging battery pack 160, which stores a voltage that is equal to or greater than the charging voltage, or the voltage supplied by the charger. Switch 116 consists of contact A for charging battery group 162A and contact B for charging battery group 162B. Thus, battery charger 110 can, e.g., charge batteries 162 to 24V, even though charger 110 outputs 12V.

Reference numeral 138 in Fig. 11 represents a voltage regulator, which regulates the voltage for driving the electronic components and supplies the regulated voltage to CPU 132 and other electronic components. CPU 132 controls charging voltage regulator 112; that is, CPU 132 controls the charging voltage supplied by battery charger 110. CPU 132 also controls the charging current by controlling switching device 114. CPU 132 further controls switch 116. By executing a program stored in ROM 128, CPU 132 controls charging voltage regulator 112, switching device 114 and switch 116. This program includes a step of determining the charging voltage and the charging current based upon parameters stored in EEPROM 164 of battery pack 160. Optimum charging voltages and charging currents can be selected for a particular battery pack type by executing a charging program using parameters stored in battery pack 160. Thus, the voltage and current supplied from the battery charger 110 are respectively adjusted to the selected charging voltage and selected charging current. CPU 132 is coupled to EEPROM 164 of battery pack 160 via communication port 134 in order to transmit and receive data.

In addition, battery charger 110 includes cooling fan 118 and display 120, which are controlled by CPU 132 via driver circuit 122. Battery charger 110 also includes thermister 124 for detecting the temperature of battery charger 110. The voltage at node 126, which voltage is divided between a resistor and thermister 124, changes with the temperature. Accordingly, the temperature of battery charger 110 can be communicated to CPU 132.

Fig. 1 shows adapter 30 according to a first representative embodiment. Fig. 2 (A) shows a block diagram of a representative control circuit arrangement for adapter 30 and charger 10. As described above with reference to Fig. 1, adapter 30 consists of charger-side adapter 40 (i.e., connecting device) coupled to charger 10, appliance-side adapter 45 (i.e., power supply device) coupled to appliance 70, e.g. a power drill, and power line (cable) 44 that supplies current from connecting device 40 to power supply device 45. Adapter 30 is interposed between charger 10 and appliance 70 and supplies power from charger 10 to appliance 70.

As shown in Fig. 1, engaging portion 32 is formed on a lower surface of connecting device (charger-side adapter) 40 of adapter 30 and engages the corresponding engaging portion 12 of battery charger 10, which charger 10 was described above with reference to Fig. 3. Engaging portion 32 includes positive/negative output terminals, a connector, and positive/negative incoming terminals (not shown), which are designed to connect with the connector. Hook 34 is disposed on one side of the connecting device (charger-side adapter) 40, which hook 34 is vertically biased by lever 36. One side of hook 34 engages hook groove 18 of battery charger 10. In this state, charger 10 is connected to connecting device (charger-side adapter) 40.

On the other hand, a pair of engaging portions (not shown) is formed on an upper side of power supply device (appliance-side adapter) 45 and the engaging portions are parallel to each other in a rail-like manner, which is similar to battery pack 50 described above with reference to Fig. 4. The pair of engaging portions engages corresponding portions of appliance 70 when power supply device 45 is mounted on appliance 70. A positive terminal groove and a negative terminal groove (not shown) are disposed between the pair of engaging portions. As shown in Fig. 2(A), power supply device (charger-side adapter) 45 includes capacitor (condenser) C. Capacitor C temporarily stores electric charge supplied from battery charger 10 and the stored electric charge is supplied to appliance 70.

As shown in Fig. 2(A), connecting device (charger-side) 40 of adapter 30 includes control portion 41 and voltage detecting portion 43, which detects the voltage supplied by power source circuit 22 of charger 10. Battery charger 10 supplies power that operates connecting device 40 (charger-side adapter). Control portion 41 of adapter 30 executes communication functions in order to communicate information to control portion 26 of charger 10. More particularly, communication is established between communication port 41a and communication port 26a of control portion 26 of charger 10.

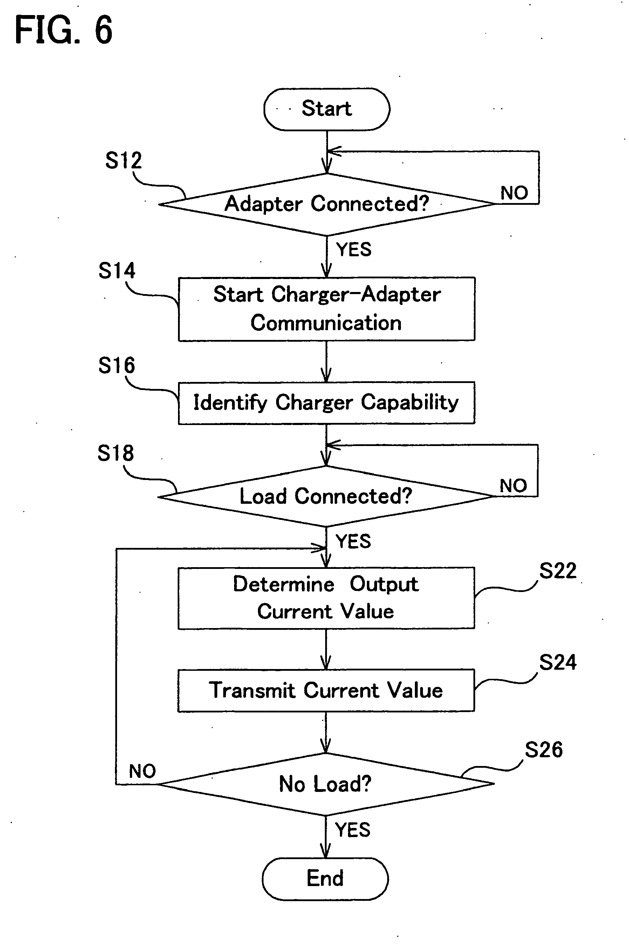

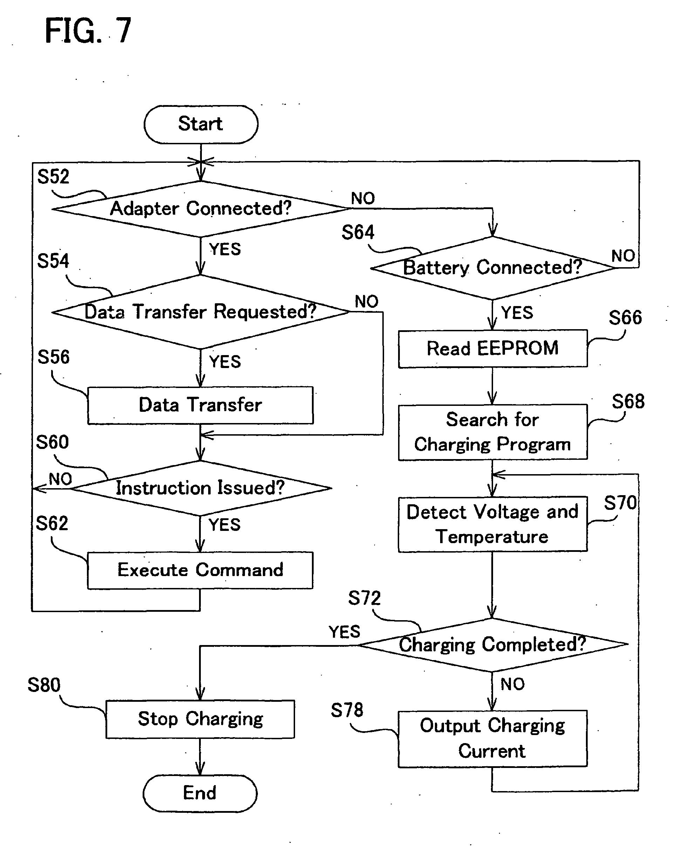

The operation of adapter 30 and battery charger 10 will further be explained with reference to the flowcharts of Fig. 6 and Fig. 7. Fig. 6 shows the control program stored in adapter 30 and Fig. 7 shows the control program stored in charger 10.

However, before explaining the control program stored in adapter 30, the operation of battery charger 10 will be explained with reference to the flowchart of Fig. 7. If battery pack 50 having EEPROM 61 is mounted on battery charger 10, the charging operations are performed in accordance with the charging control program stored in ROM 128, which ROM 128 is shown in Fig. 11. On the other hand, if adapter 30 is mounted on battery charger 10, current is supplied from power source circuit 22 to adapter 30 in accordance with the instructions generated by adapter 30.

If battery pack 50 is mounted on battery charger 10 (i.e. without adapter 30) as shown in Fig. 2(B), step S52 of Fig. 7 becomes NO and the process proceeds to step S64, which becomes YES when control portion 26 detects the battery voltage (using voltage detecting portion 27) and/or when control portion 26 detects the battery temperature (using the temperature detecting portion 28). If battery pack 50 is mounted and step S64 is YES, information stored in EEPROM 61 is read (step S66). The appropriate charging control program stored in memory 29 or ROM 128 is selected in accordance with mounted battery pack 50 (step S68). Then, the voltage/temperature of batteries 58 are respectively detected by voltage detecting portion 27 and temperature detecting portion 28 (step S70). Based upon the battery voltage/temperature information, the processor determines whether the charging operation has been completed (step S72). If the charging operation has not been completed (NO in step S72), the appropriate battery charging current, which was determined based upon the battery voltage and the battery temperature, is supplied from power circuit 22 to batteries 58 until the charging operation is completed. Preferably, the temperature value output from temperature detecting portion 28 is differentiated in order to generate a temperature increase rate; then, the specific charging current value is selected based upon a control program stored in memory 29. The current value is output to the charging-current control portion 24 as a current instructing value for controlling the charging current. When the processor determines that the charging operation has been completed based upon the battery temperature and voltage (YES in step S72), charging is terminated (step S80) and the process ends.

Next, a representative method for use when charger-side adapter (connecting device) 40 is mounted on charger 10, as shown in Fig. 2(A), will now be explained with reference to Figs. 6 and 7. Upon determining that adapter 30 has been mounted on or connected to battery charger 10 (YES in step S12 of Fig. 6), control portion 41 of connecting device 40 of adapter 30 initiates communication with control portion 26 of battery charger 10 (step S14). Inquiries are first made to control portion 26 of battery charger 10 with respect to the charging parameters of battery charger 10, such as the maximum output current. In response to this inquiry, step S54 of Fig.7 becomes YES and control portion 26 of battery charger 10 transmits charging parameter data from battery charger 10 to control portion 41 of adapter 30 (step S56). As a result, adapter 30 recognizes the charging capabilities of charger 10 (step S16 of Fig. 6).

Upon mounting power supply device (appliance-side adapter) 45 of adapter 30 on appliance 70, i.e., a load, as shown in Fig. 2 (A), control portion 41 detects the mounting of power supply device 45 by using a sensor (not shown) (YES in step S18) and initiates the supply of the charging current. Charger 10 first outputs the same voltage as the voltage of battery pack 50, which will be coupled to appliance 70. Next, control portion 41 determines the current value that will be supplied to capacitor C (step S22). Then, instructions relating to the selected charging current value are transmitted to control portion 26 of battery charger 10 (step S24).

If adapter 30 has been mounted (YES in step S52 of Fig. 7), control portion 26 of battery charger 10 remains in a stand-by condition in order to receive instructions from adapter 30 (step S60). Upon receipt of instructions from adapter 30 concerning the charging current value, which was described above (YES in step S60), the power source circuit 22 is controlled based upon such instruction values, and the appropriate charging current is supplied to capacitor C (step S62).

Upon detection of disengagement of power supply device (appliance-side adapter) 45 from appliance 70 by control portion 41 of adapter (YES in step S26 of Fig. 6), the power supply operation is terminated.

Thus, while adapter 30 is mounted on charger 10, the controller disposed within the adapter controls the charger or the controller disposed within the charger does not control the charger.

In the first embodiment, charger-side adapter (connecting device) 40 controls the charging voltage and the charging current supplied by battery charger 10 in order to store power in capacitor C of appliance-side adapter (power supply device) 45 via power line 44. Accordingly, by causing a small current to continuously flow through power line 44, power can be stored in capacitor C. Preferably, a relatively large amount of power is supplied to appliance 70 within a short time, because power that is stored in capacitor C of appliance-side adapter (power supply device) 45, which is coupled to appliance 70, is directly supplied to appliance 70. As long as appliance (e.g., drill) 70 is driven intermittently, appliance 70 can be driven many times without using battery pack 50 and without causing a decrease in the voltage of capacitor C. In addition, because a long life capacitor may be utilized to store power in this embodiment, reliable supply of power to the appliance is ensured for a long time.

The following examples are for explanatory purpose and are not in accordance with the invention.

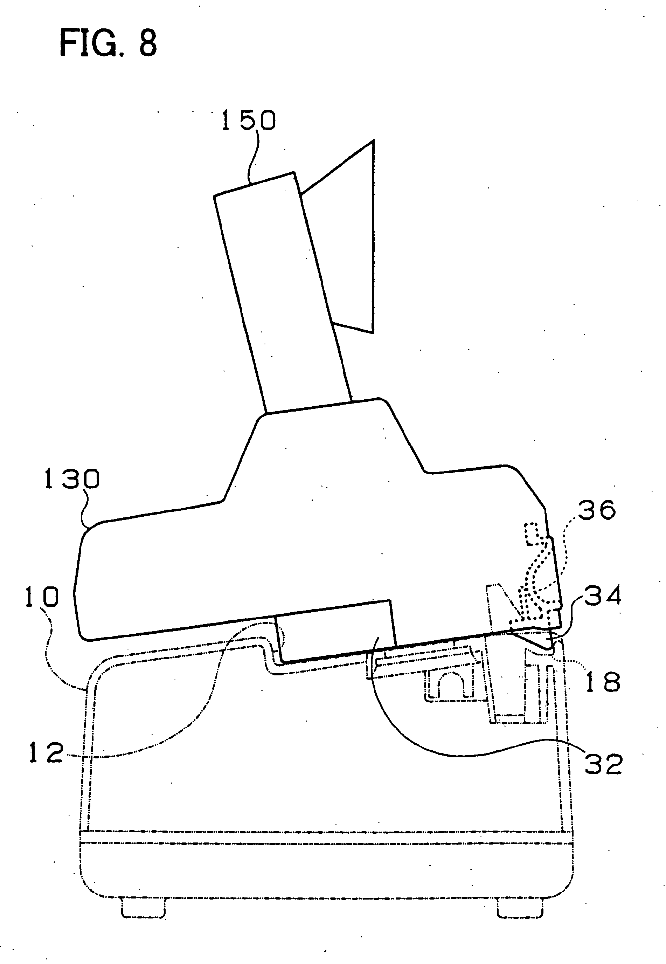

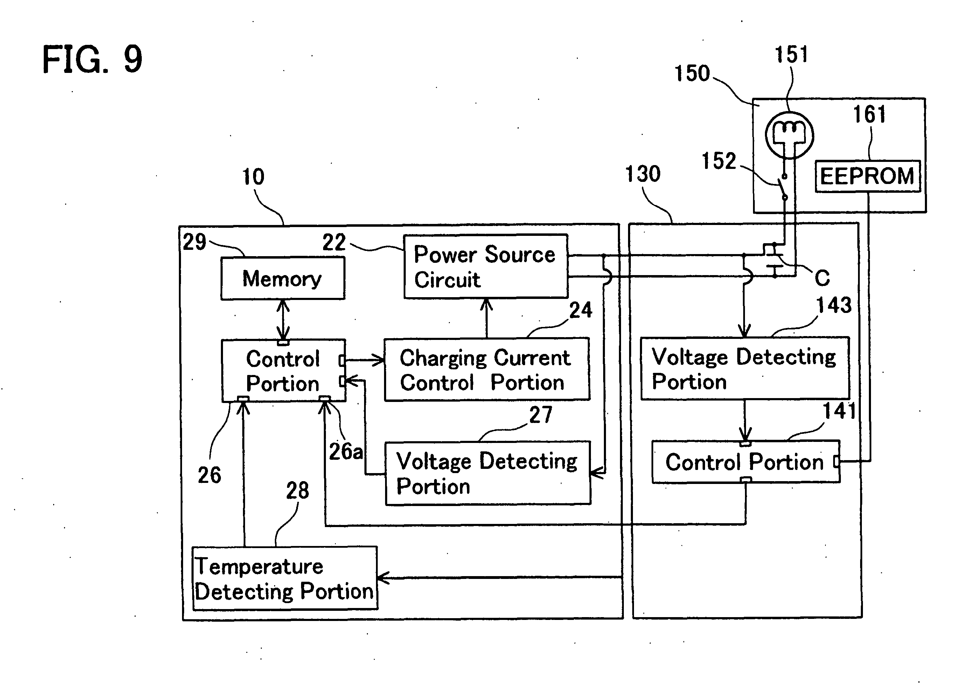

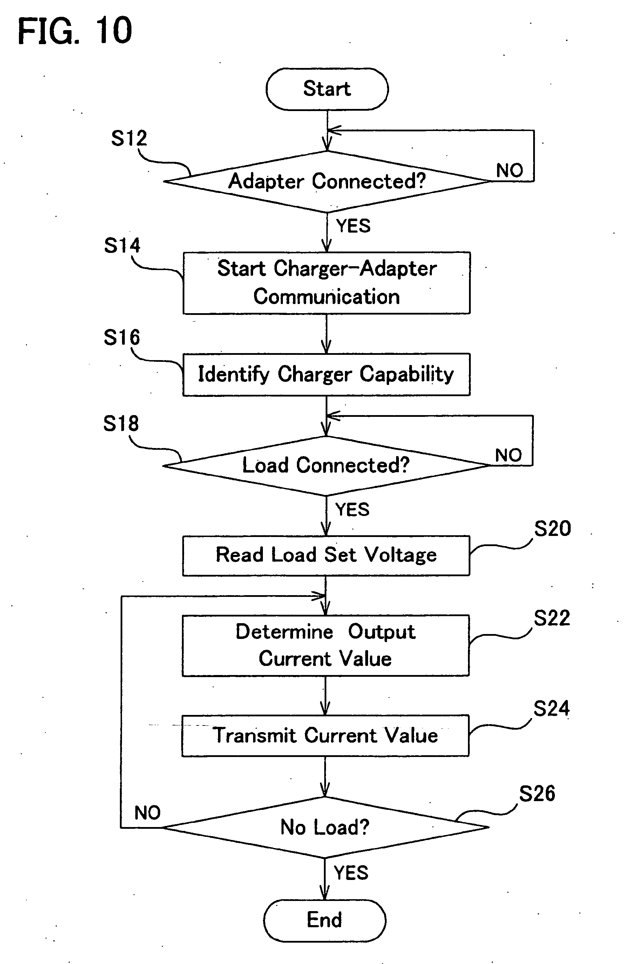

Next, adapter 130 constitutes an example which is not part of the invention. Fig. 8 is an explanatory view of adapter 130. Fig. 9 is a block diagram of adapter 130. Fig. 10 is a flowchart that describes a control program for adapter 130.

. Adapter 30 of the first embodiment comprises charger-side adapter (connecting device) 40 and appliance-side adapter (power supply device) 45, which are separate from each other. Adapter 130 of this example is a single-piece structure. Whereas adapter 30 of the first embodiment supplies a constant voltage to the appliance 70, adapter 130 of the example supplies power in accordance with the load demand (of the appliance).

As shown in Fig. 8, lamp (load) 150 is directly connected to adapter 130. As shown in Fig. 9, lamp 150 includes electric bulb 151, switch 152 and EEPROM 161; electric bulb 151 is illuminated when switch 152 is turned ON. Electric bulb 151 is set so as to be illuminated at a voltage of, e.g., 12V. Identification information is written in EEPROM 161 so that 12V will be supplied from battery charger 10. Control portion 141 of the second representative adapter 130 includes a reader. Adapter 130 reads the identification information written in EEPROM 161 of lamp 150, and transmits instructions to control portion 26 of battery charger 10 in order to supply 12V of power to lamp 150 via power circuit 22.

In Fig. 8, lamp 150 is connected to adapter 130. However, appliances that can be connected to adapter 130 are not limited to lamps, and include other appliances, such as radios, televisions, measuring devices, which can also be connected to adapter 130. Each appliance that can be connected to adapter 130 incorporates EEPROM 161, thereby enabling adapter 130 to read the identification information for the appliance connected to adapter 130.

A process executed by control portion 141 of adapter 130 will be explained below with reference to the flowchart of Fig. 10. Steps S12 through steps S18 of Fig. 10 are identical to steps S12 through steps S18 of the first embodiment that was described above with reference to Fig. 6. In step S20, control portion 141 reads identification information (load set voltage) stored in EEPROM 161 for, e.g., lamp 150, in order to initiate the supply of output current. First, the output voltage of charging device 10 is adjusted to a voltage (12V, if a lamp is connected to adapter 130) that corresponds to the identification information. Next, the amount of current that will be supplied to capacitor C is determined (step S22). Subsequently, an instruction representing the selected output current value is transmitted to control portion 26 of battery charger 10 (step S24). After control portion 141 determines that lamp 150 has been disconnected from adapter 130 (YES in step S26), the process is terminated.

In the example control portion 141 reads the identification information stored in EEPROM 161 of the appliance (load) 150, and controls the output voltage of battery charger 10 according to the read identifier. Thus, the voltage that the load requires can be supplied to the appliance (load). In addition, because adapter 130 includes capacitor C, which stores power supplied from charger 10, a relatively large amount of power can be supplied to the load within a short time.

In the example, battery charger 10 is constructed to control charging current. However, needless to say, the adapter of the present invention may be utilized for a battery charger that adjusts a charging voltage. In addition, the adapter of the present invention can also be utilized for a battery charger that adjusts both the charging current and charging voltage.

Examples of basic structure for battery chargers.

Various adapters and various improved battery packs, which will be described below, may be connected to battery charger 110 shown in Fig. 11. As a result, charger 110 can be utilized in a variety of ways and charger 110 will now be further described.

Charger 110 includes charging voltage regulator 112, switching device 114, switch 116, CPU 132, ROM 128, communication port 134, driver circuit 122, cooling fan 118, display 120, voltage regulator 138, thermister 124, and other electric components.

CPU 132 is capable of transmitting/receiving data to/from external devices via communication port 134. In the battery charger 110 shown in Fig. 11, CPU 132 can read data stored in EEPROM 164 of battery pack 160. ROM 128 stores a program that is executed by CPU 132. The program includes, e.g., a step of reading data from the external device using CPU 132, a step of outputting data to the external device, and a step of performing a calculation based upon data input from the external device.

CPU 132 controls charging voltage regulator 112 in order to adjust the voltage, which is supplied from battery charger 110, to the selected voltage value. CPU 132 also controls switching device 114 in order to adjust the charging current, which is supplied from charger 110, to the selected current value. In addition, CPU 132 controls switch 116.

Such an electronic circuit enables battery charger 110 to output charging power, which is the same as the selected voltage and current, and to switch an output terminal using switch 116. Basically, the voltage and current are determined by executing the program that is stored in ROM 128. If necessary, data input from the external device and data concerning the resistance value of thermister 166 are utilized. Thermister 124, which is disposed within charger 110, collects data on the temperature inside charger 110.

CPU 132 of battery charger 110 may receive a signal from the CPU of the external device and then directly output the signal to the appliance that will be controlled. In this case, the external device controls charger 110. In some cases, CPU 132 may be operated by executing the program that is stored in the external device. In this case, charger CPU 132 executes the program instead of the external device.

CPU 132 controls the voltage that is adjusted by charging voltage regulator 112. For example, the voltage is adjusted to a DC voltage of 12V or 16V. Switching device 114, which adjusts the charging current value, is connected to the output side of charging voltage regulator 112. Switching device 114 is intermittently turned ON and OFF by CPU 132 and driver circuit 122. A fixed period of time is predetermined. A large current is generated when the switch is turned ON for a long time within the fixed period of time and a small current is generated when the switch is turned ON for a short time within the fixed period of time. Switch 116 serves to charge a battery pack having a battery voltage that is equal to or greater than the charging voltage. That is, switch 116 charges battery group 162A by switching to contact A and charges battery group 162B by switching to contact B. Thus, charger 110 is, e.g., capable of charging battery group 162 to 24V while outputting only 12V.

The constant voltage adjusted by voltage regulator 138, which regulates the voltage that is utilized for driving the electronic components, is supplied to, e.g., CPU 132. CPU 132 controls charging voltage regulator 112, thereby adjusting the voltage of battery charger 110. In addition, CPU 132 controls switching device 114, thereby adjusting the charging current. Further, CPU 132 controls switch 116, which switches between contact A and contact B. By executing the program stored in ROM 128, CPU 132 controls charging voltage regulator 112, switching device 114, and switch 116. The program includes an algorithm that uses the parameters stored in EEPROM 164 of battery pack 160. By executing the algorithm using the parameters, the optimum charging voltage and charging current for charging battery pack 160 are determined. The voltage and current are adjusted to the selected charging voltage and current. CPU 132 is coupled to EEPROM 164 of battery pack 160 via communication port 134.

Battery charger 110 includes cooling fan 118 and display 120, which are controlled by CPU 132 via driver circuit 122. Thermister 124 detects the temperature inside charger 110.

### Examples of charging appliances containing batteries

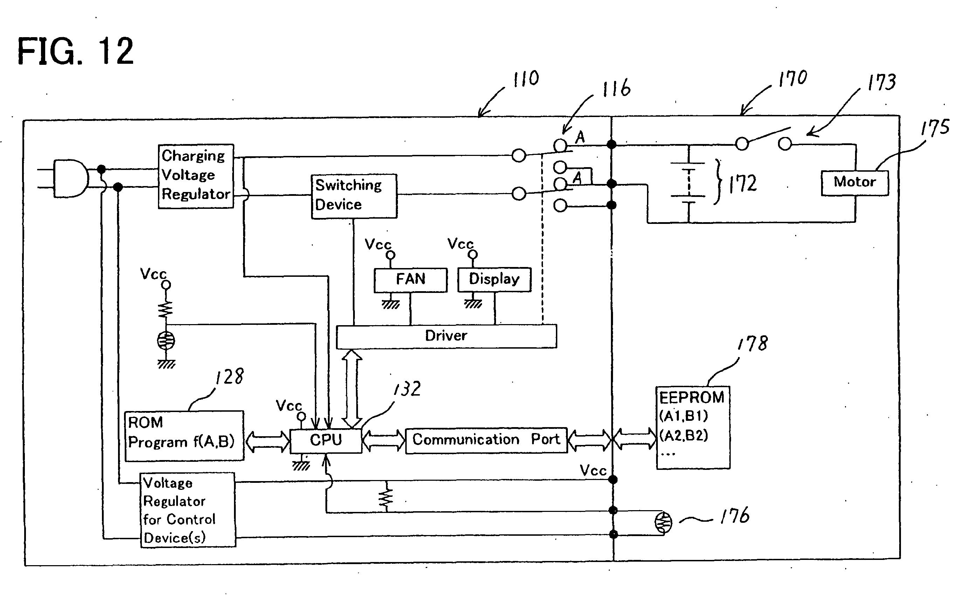

There are two types of cordless appliances that are powered by batteries. One type of such appliances allows the battery packs to be freely disconnected from the devices. The other type of appliances contains batteries that cannot be disconnected from the appliance. Fig. 11 depicts the electronic circuit that is utilized in order to charge battery pack 160 coupled to battery charger 110. Fig. 12 depicts an electronic circuit that charges appliance 170, which is coupled to charger 110. Appliance 170 includes battery group 172, switch 173 and motor 175. When switch 173 is turned ON, battery group 172 supplies driving current to motor 175, thereby driving appliance 170. Appliance 170 may be, e.g., a cordless power tool or a cordless household appliance.

In the case of appliance 170 shown in Fig. 12, because the voltage of battery group 172 is lower, it is not necessary to separately charge two battery groups and switch 116 can be simply maintained at contact A.

Fig. 11 shows the electronic circuit that is utilized when battery charger 110 charges battery group 162; a control program for battery group 162 is stored in ROM 128. Fig. 12 shows the electronic circuit that is utilized when charger 110 charges battery group 172; a control program for battery group 172 is stored in ROM 128. CPU 132 reads the values of the parameters that are respectively stored in EEPROM 164 and EEPROM 178. CPU 132 then processes the read parameters according to the corresponding programs in order to determine the charging voltages and charging currents. Subsequently, CPU 132 supplies charging power, which is the same as the selected voltage and current, to each corresponding battery group. Thus, each battery group is charged with the corresponding optimum voltage and current. The programs and the parameters are selected so that the optimum voltages and the optimum currents are determined for the corresponding battery group.

### Further example of an adapter

In the electronic circuits of Figs. 11 and 12, because battery charger 110 operates in accordance with the parameter values that are respectively stored in EEPROMs 164, 178, and the programs stored in the ROM 128, each battery group is charged with the optimum voltage and the optimum current.

However, the optimum charging current for each battery group is not necessarily a single optimum charging current. For instance, if rapid charging is required, the optimum rapid charging current must be utilized. On the other hand, if rapid charging is not required, an optimum current that is different from the optimum rapid charging current must be utilized.

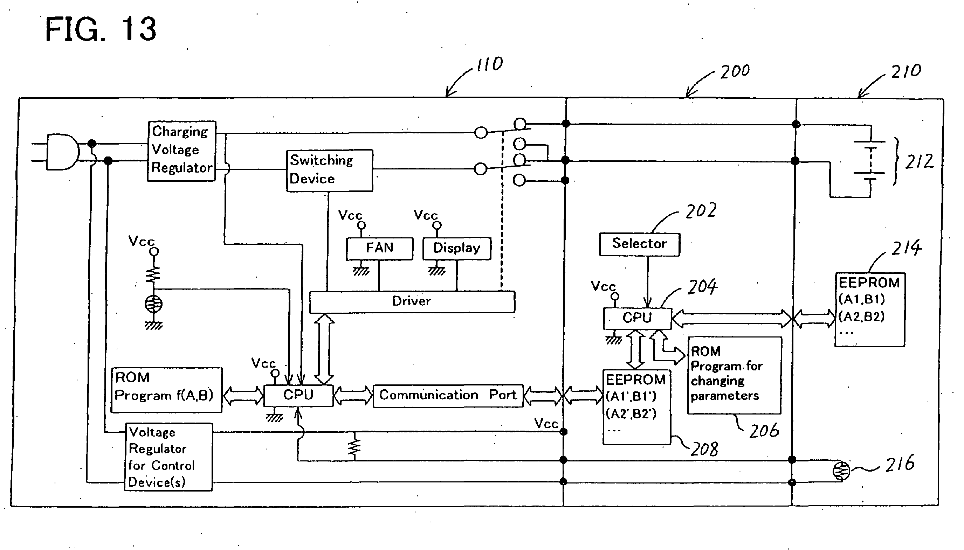

A variety of programs may be preferably stored in battery charger 110. However, this increases the cost of charger 110. To overcome such a problem, adapter 200, which is shown in Fig. 13, has been developed in order to enable a user, who requires fine adjustments of charging, to optimally control the charging power. Adapter 200 includes CPU 204 that can rewrite parameters. EEPROM 214 of battery pack 210 stores the parameters. The EEPROM 214 stores the normal optimum charging current value for the corresponding battery pack. Some users may prefer faster charging, even though the usable life of the battery may be shortened; on the other hand, other users may prefer slow charging in order to maximize the useable life of the battery. Adapter 200 can be utilized for such purposes.

Adapter 200 includes selector switch 202, which can be manipulated by the user. If charging that is faster than normal speed charging is desired, switch 202 is placed in the "rapid" position. If charging that is slower than the normal speed charging is desired, switch 202 is placed in the "slow" position. Consequently, CPU 204 corrects the value of the parameters stored in battery pack 210 in accordance with a parameter correction program, which is stored in ROM 206. CPU 204 then stores the corrected parameters in EEPROM 208. At this time, parameters are modified to parameters for rapid charging when a rapid charging operation has been requested; on the other hand, parameters are modified to parameters for slow charging when a slow charging operation has been requested.

Because battery charger 110 calculates the charging current value using the corrected parameter, the charger 110 will charge the battery pack according to the conditions that have been set by the user.

### Example of usage of battery charger

After battery charger 110 has been commercially marketed, new types of battery packs might be developed. In such a case, without changing the charging control program, some of the battery packs can be satisfactorily charged by changing only the values of the parameters that are stored in the respective battery packs. Other battery packs cannot be satisfactorily charged unless a new charging control program is used. Thus, in the latter case, battery chargers that have been commercially marketed may have become obsolete for new types of battery packs and cannot charge the new types of battery packs.

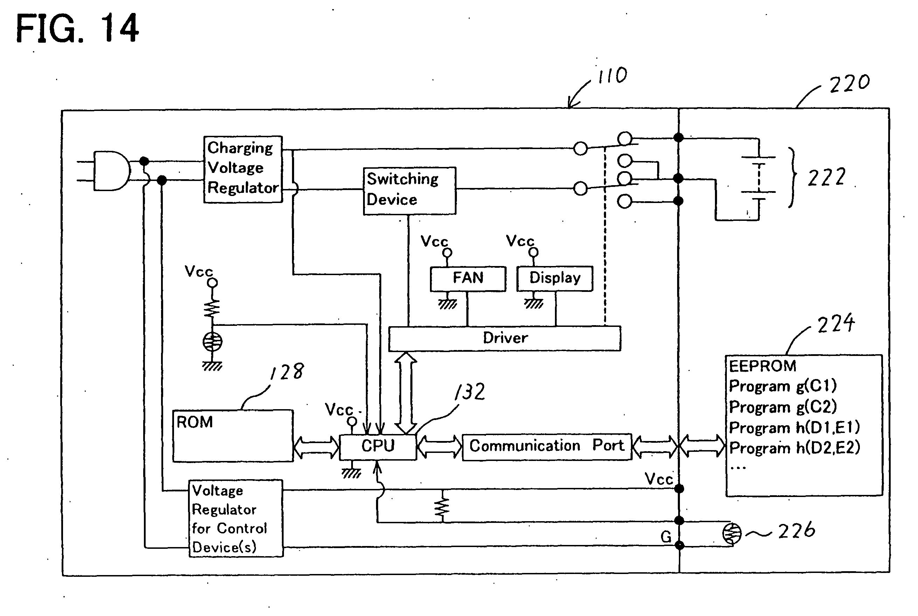

However, battery charger 110 of the present invention is designed to recharge new types of batteries that may be developed in the future. As shown in Fig. 14, if EEPROM 224 of an external device (e.g., a new type battery pack 220) is connected to CPU 132 of battery charger 110, CPU 132 operates in accordance with a program that is stored in EEPROM 224 of the external device, instead of the program that is stored in ROM 128 of charger 110.

EEPROM 224 of each the new type battery pack 220 stores a control program in order to optimize the charging voltage and charging current for the battery pack. Because battery charger 110 is controlled in accordance with this program, even older model charger 110 is capable of recharging the new type battery pack 220.

EEPROM 224, which stores the program, may be incorporated within the adapter, which is detachable from battery pack 220. In such case, if the operator uses, e.g., ten new type battery packs, only one adapter that stores the program and the ten new type battery packs, which do not store the program, are required, which permits cost reductions.

### Example of usage of battery charger

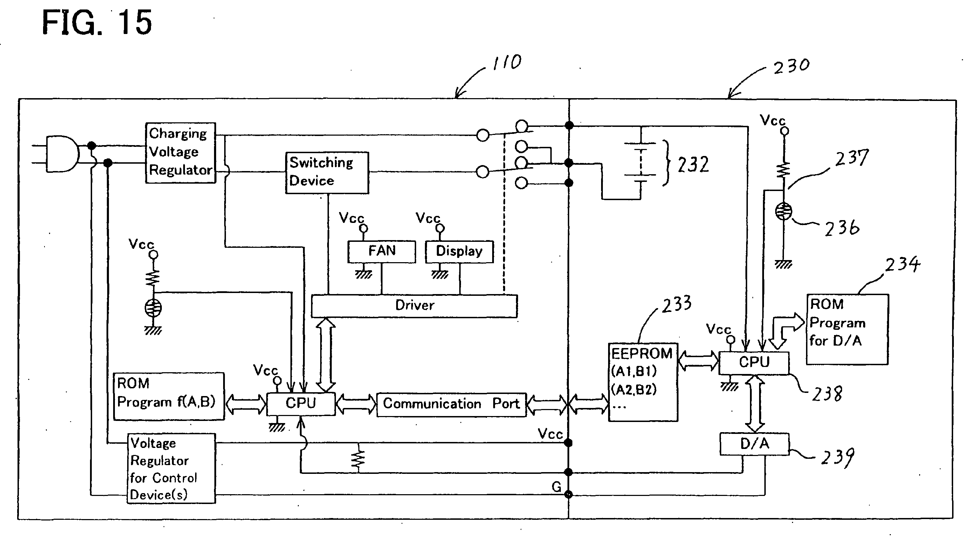

The circuit of Fig. 15 may be utilized within a new type battery pack 230, so that the older model charger 110 can recharge the new type battery pack 230. In such a case, a circuit that artificially generates a temperature signal is disposed within battery pack 230.

As noted above, battery charger 110 controls the charging current according to the battery temperature. The charging current is increased if the rate of battery temperature increase is slow; on the other hand, the charging current is decreased if the rate is high. Conversely, if the charging current has been determined, the temperature increase rate relative to the charging current can be determined using an algorithm.

CPU 238 of battery pack 230 of Fig. 15 executes such an algorithm. Specifically, CPU 238 determines the optimum charging current based upon the battery temperature that was detected by thermister 236 and based upon the parameters that are stored in EEPROM 233. Subsequently, battery charger 110 determines the temperature increase rate relative to the selected charging current. After the temperature increase rate has been determined, a temperature signal (analog signal) corresponding to the temperature increase rate is output from D/A converter 239. The outputted analog signal, which serves as the battery pack temperature signal, is input to charger 110. Charger 110 selects the charging current based upon the input battery pack signal and then outputs the selected charging current, which is equal to the optimum charging current that was selected by CPU 238 of battery pack 230. Thus, such a method also enables the older model charger 110 to charge new type battery pack 230.

In such a case, CPU 238 and other electronic components can be disposed within the adapter, which is separable from battery pack 230. Therefore, it is not necessary to provide CPU 238 in every new type battery pack 230. If the operator uses three types of battery packs, only one adapter that includes CPU 238 will be required for the three different types of battery packs that do not include a CPU.

### Example of usage of battery charger

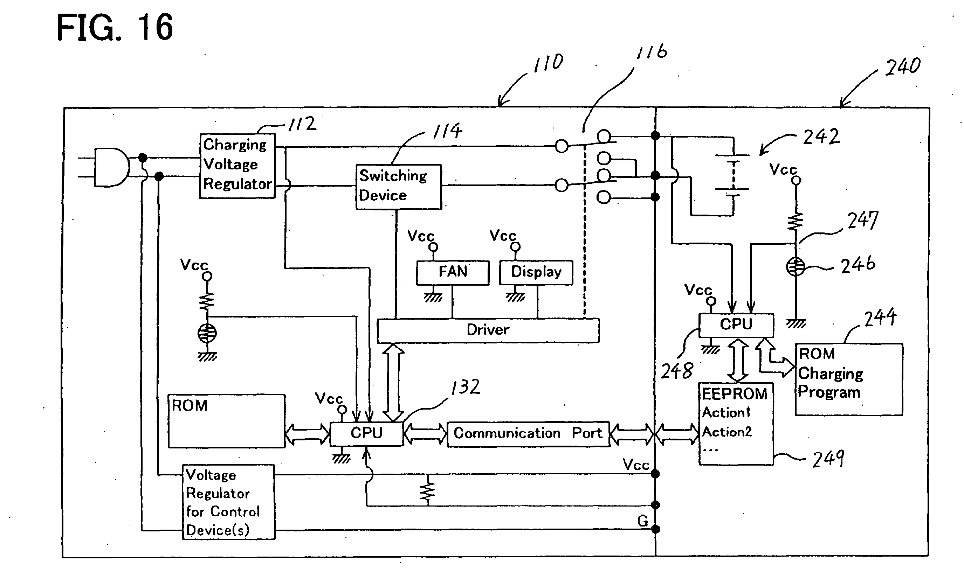

By utilizing the circuit of Fig. 16 in new type battery pack 240, battery pack 240 can be charged using older model battery charger 110. In this case, CPU 248 is disposed within battery pack 240. CPU 248 outputs a control signal for charging voltage regulator 112, switching device 114, and switch 116 of charger 110. The outputted control signal is stored in EEPROM 249. In order to generate the control signal, a program that is stored in ROM 244, the output value of thermister 246, and the voltage of battery group 242 are utilized. Such utilization enables CPU 248 to generate a control signal that ensures optimum control of the charging operation and to store the control signal in EEPROM 249.

CPU 132 of battery charger 110 reads the control signal, which was stored in EEPROM 249, and transmits a read control signal to charging voltage regulator 112, switching device 114 and switch 116. Such a method also enables older model charger 110 to recharge new type battery pack 240.

In addition, this method also allows CPU 248 and other electronic components to be disposed within an adapter that is separable from battery pack 240. Accordingly, it is not necessary to provide CPU 248 in every new type battery pack 240.

### Example of usage of battery charger

Charger 110 of this example is capable of charging battery pack 250, in which a plurality of thermisters, 253, 256, 257 are utilized in order to improve a fail-safe function.

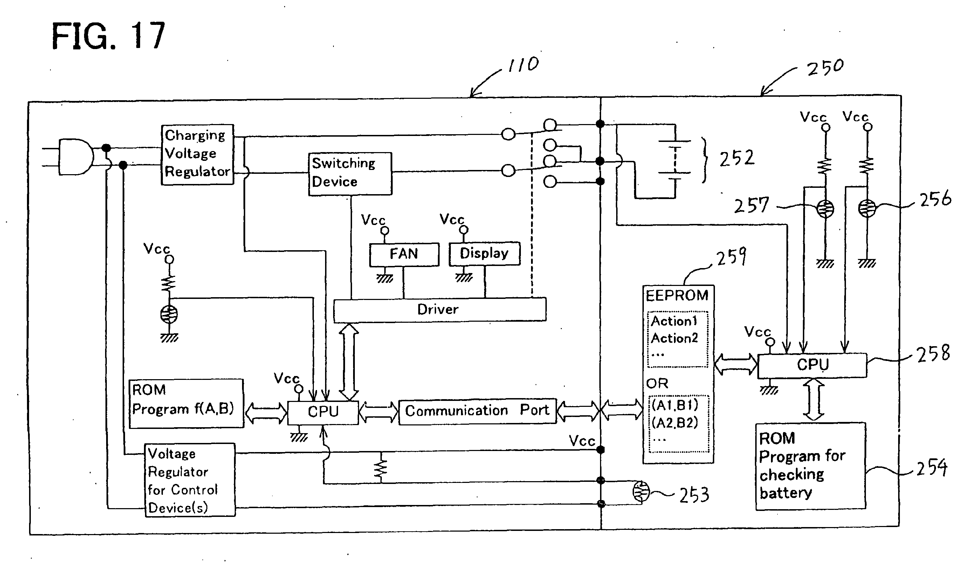

As shown in Fig. 17, in addition to primary thermister 253, battery pack 250 also includes second thermister 256 and third thermister 257, which are separately disposed within battery pack 250.

Normally, battery charger 110 controls the charging current based upon the voltage of primary thermister 253. However, if CPU 258 detects an abnormal temperature increase while monitoring the voltages of thermisters 256, 257, which are separately disposed within battery pack 250, CPU 258 issues a stop control signal due to the abnormal state and causes the charger 110 to interrupt the charging operation. Thus, because the charging operation is stopped, battery pack 250 is prevented from being continuously charged during an abnormal temperature increase condition.

### Example of usage of battery charger

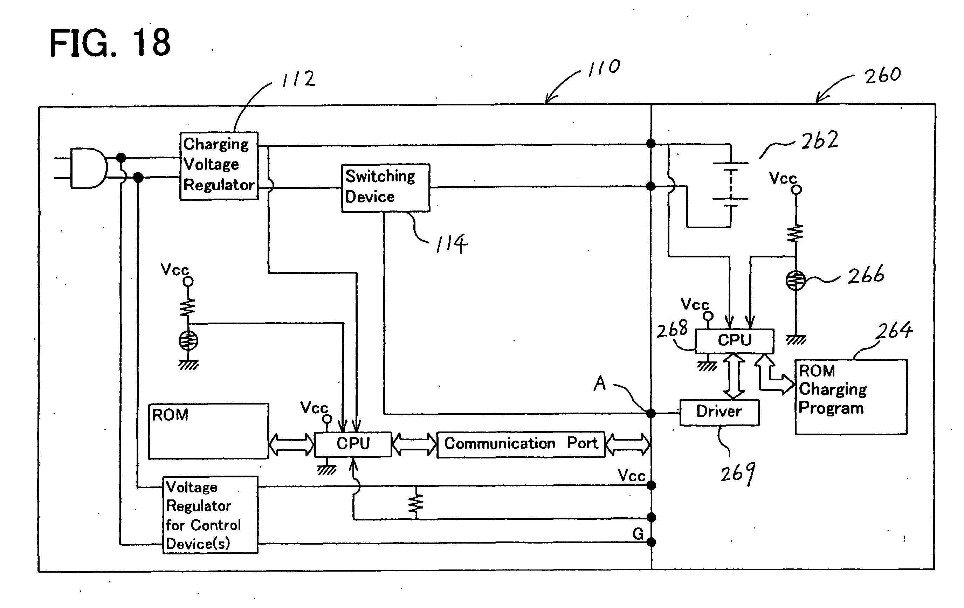

By utilizing the circuit of Fig. 18 in new type battery pack 260, battery pack 260 can be charged using older model battery charger 110. In this case, CPU 268 is contained within battery pack 260. CPU 268 outputs a control signal for charging voltage regulator 112 and switching device 114 of charger 110. Battery pack 260 includes driver circuit 269. Driver circuit 269 and CPU 268 control charging voltage regulator 112 and switching device 114. Adapter CPU 268 bypasses charger CPU 132 and controls charger 110.

In this case, older model charger 110 includes contact A; therefore, older model charger 110 is capable of charging new type battery pack 260. This method also enables CPU 268, driver circuit 269, and other electronic components to be disposed within an adapter that is separable from battery pack 260. Accordingly, it is not necessary to provide CPU 268, driver circuit 269, etc., in every new type battery pack.

### Example of usage of battery charger

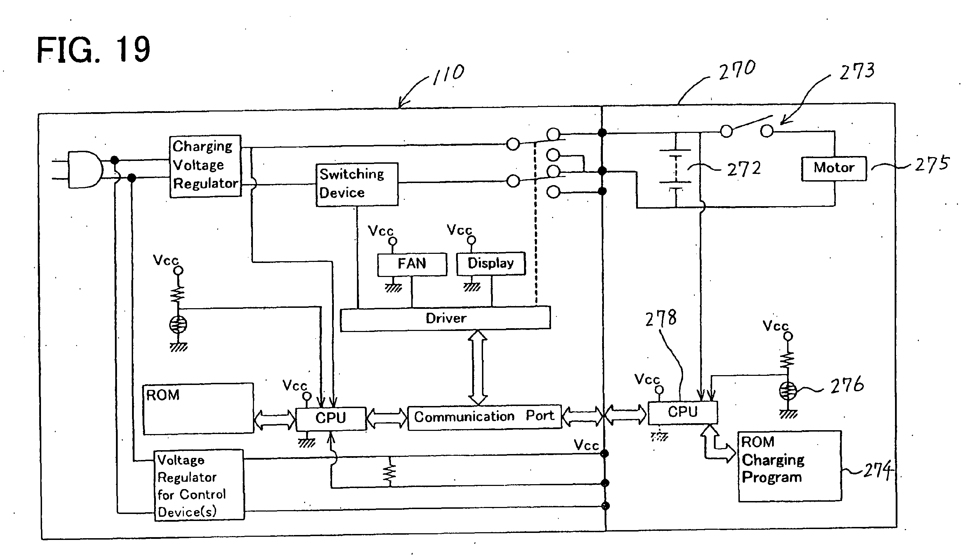

Fig. 19 shows battery charger 110 coupled to appliance 270, which includes built-in batteries. CPU 278 is incorporated in appliance 270 and controls charger 110. In such case, not only the characteristics of the battery pack, but also a charging control program that is appropriate for the characteristics of the appliance, can be stored in ROM 274. Thus, when appliance CPU 278 controls charger 110, it is possible to provide optimal charging control in view of the characteristics of appliance 270.

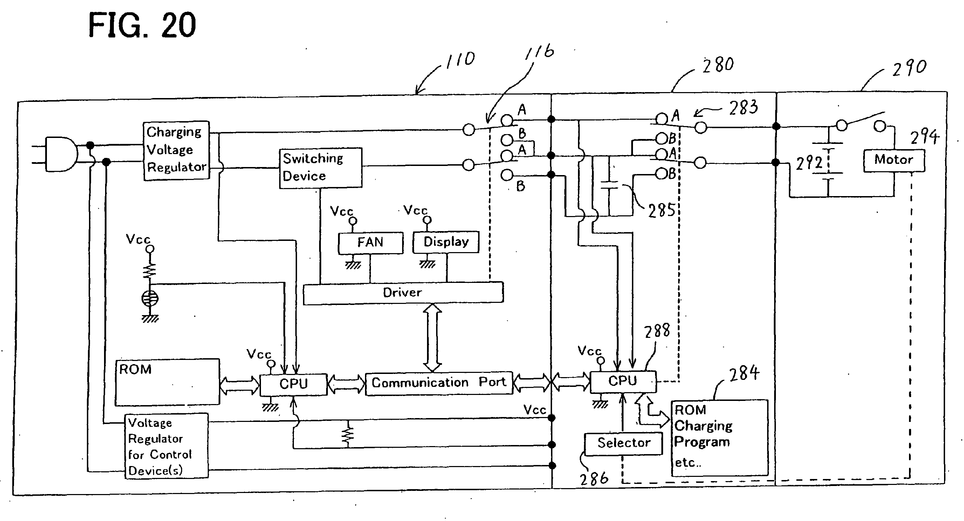

As in the example shown in Fig. 20, adapter 280 is coupled to battery charger 110 in order to supply driving current to starter motor 294 of a vehicle engine or in order to charge battery 292, which is disposed within the vehicle.

In order to supply driving current to starter motor 294, CPU 288 switches switch 116 of charger 110 and switch 283 of adapter 280 to contacts B. At this time, CPU 288 controls charger 110 so that the appropriate voltage and current for charging large-capacity capacitor 285 are supplied from charger 110. A control program is stored in ROM 284. When the switch for starter motor 294 is actuated after capacitor 285 has been charged with sufficient electric charge, a large current flows from the capacitor 285 in order to rotate starter motor 294. Consequently, the engine starts.

On the other hand, in order to charge batteries 292, which is disposed within the vehicle, CPU 288 switches switch 116 of charger 110 and switch 283 of adapter 280 to contacts A. At this time, CPU 288 controls charger 110 so that the appropriate voltage and current for charging batteries 292 are supplied from charger 110. A control program is stored in ROM 284.

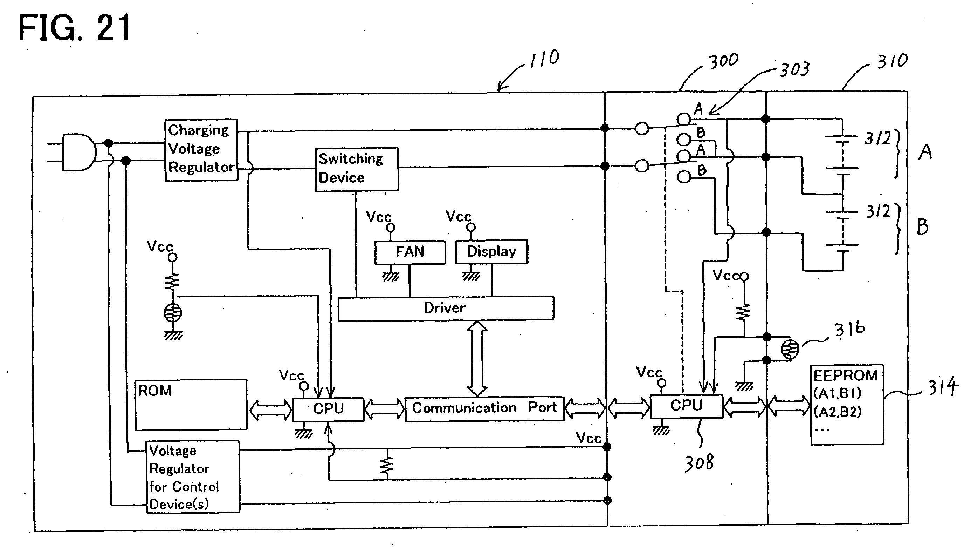

The example shown in Fig. 21, includes battery charger 110 that does not include switch 116, battery pack 310 that outputs a battery voltage, which is higher than the voltage that can be supplied by charger 110, and adapter 300. Adapter 300 is utilized in order to charge battery pack 310 using charger 110. Adapter 300 includes switch 303 and CPU 308 switches switch 303. First, CPU 308 uses contacts A for charging battery group 312A. After battery group 312A has been charged, CPU 308 switches switch 303 to contacts B in order to charge battery group 312B. In the alternative, switch 303 may be periodically switched between contacts A and contacts B. Charging current control circuitry is shown in Fig. 11.

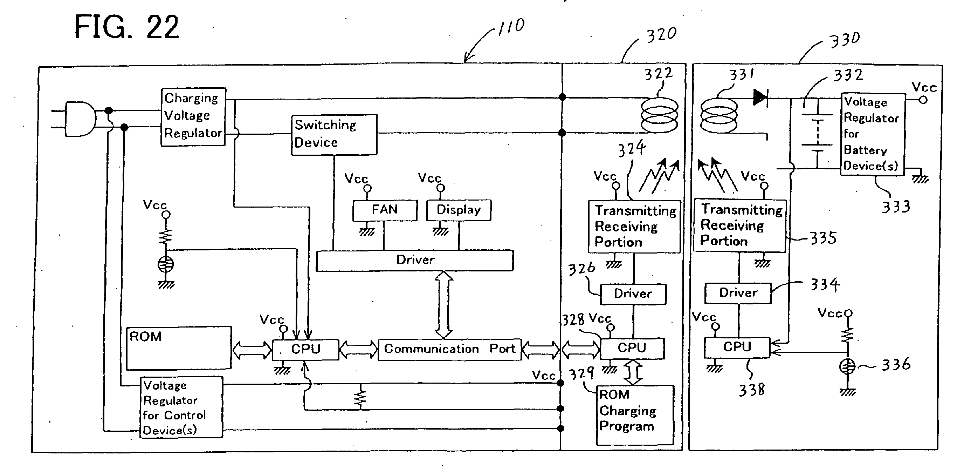

As shown in the example of Fig. 22, adapter 320 is utilized when contact-less battery pack 330 is recharged using charger 110.

Battery pack 330 includes induction coil 331. Battery group 332 is charged with a current that was generated by rectifying the current produced by coil 331. A portion of the current that is stored in the batteries is utilized in order to output control power. Therefore, constant voltage power source circuit 333 is incorporated within battery pack 330. CPU 338, driver circuit 334 and transmitting/receiving portion 335 are driven by the power source. CPU 338 controls transmitting/receiving portion 335 such that data concerning the type of battery pack 330 and data concerning the battery temperature may be transmitted from the battery pack by CPU 338. Transmitting/receiving portion 335 transmits the data to the external device by generating infrared rays or radio waves.

The data is received by transmitting/receiving portion 324, which is disposed within adapter 320. CPU 328 controls battery charger 110 based upon the received data and a program that is stored in ROM 329. Power supplied from charger 110 is applied to induction coil 322 of adapter 320 in order to induce induction power into induction coil 331 of battery pack 330. CPU 328 controls charger 110 so that the optimum charging current is induced in coil 331 in order to charge battery group 332. By utilizing adapter 320, contact-less battery pack 330 can be charged using charger 110, which is ordinarily utilized for battery packs having contacts.

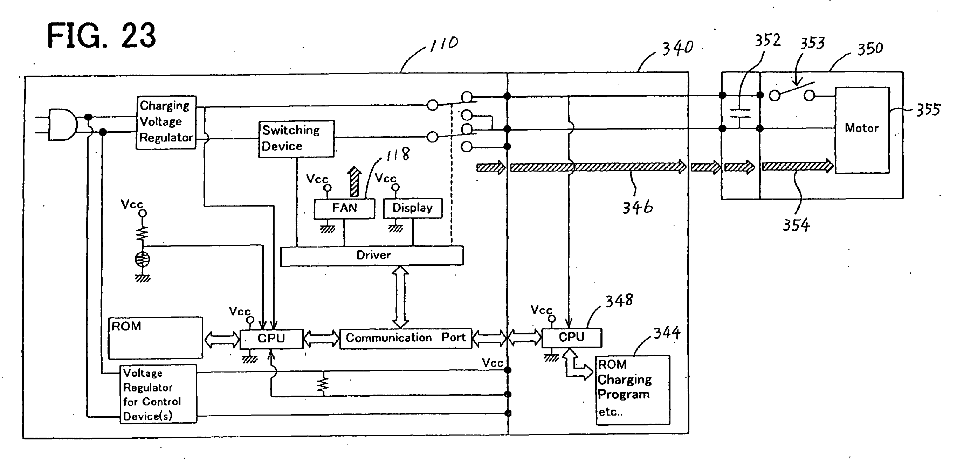

The example shown in Fig. 23, includes adapter 340, which is the same type as the adapter that is shown in Fig. 1. Capacitor 352 drives motor 355 and other electrical components. Adapter 340 includes a cooling air duct 346. The cooling air duct 346 conveys a portion of the cooling air that is produced by cooling fan 118 of battery charger 110 in order to cool appliance 355. Normally, the appliance is cooled by utilizing the rotation of motor 355. Therefore, the appliance cannot be cooled when motor 355 is not rotating. By utilizing adapter 340, the appliance can be cooled even when motor 355 is not rotating. In this case, motor 355 is connected to adapter 340. However, motor 355 is shown within the adapter for the convenience of illustration.

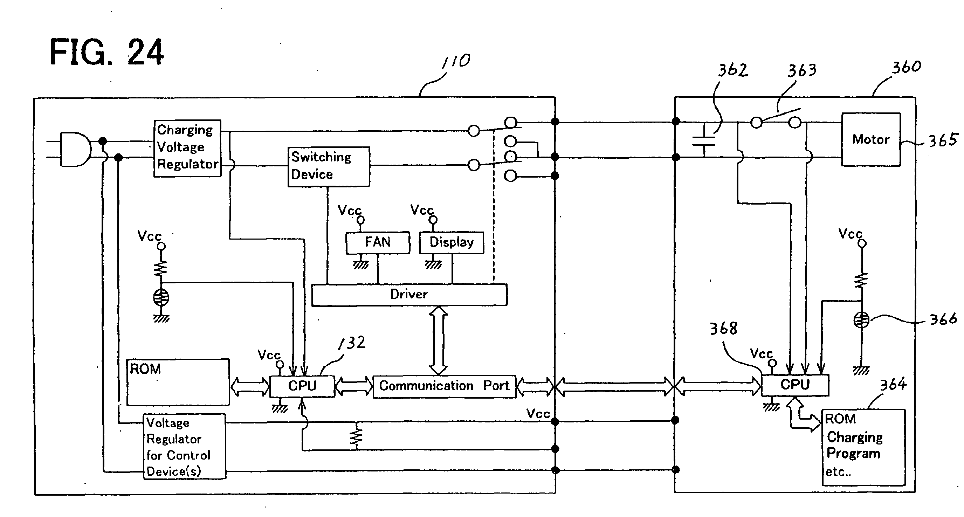

As shown in the example of Fig. 24, adapter CPU 368 communicates with charger CPU 132 via radio signals. In this case, motor 365 is connected to adapter 350. However, motor 365 is shown within the adapter for the convenience of illustration.

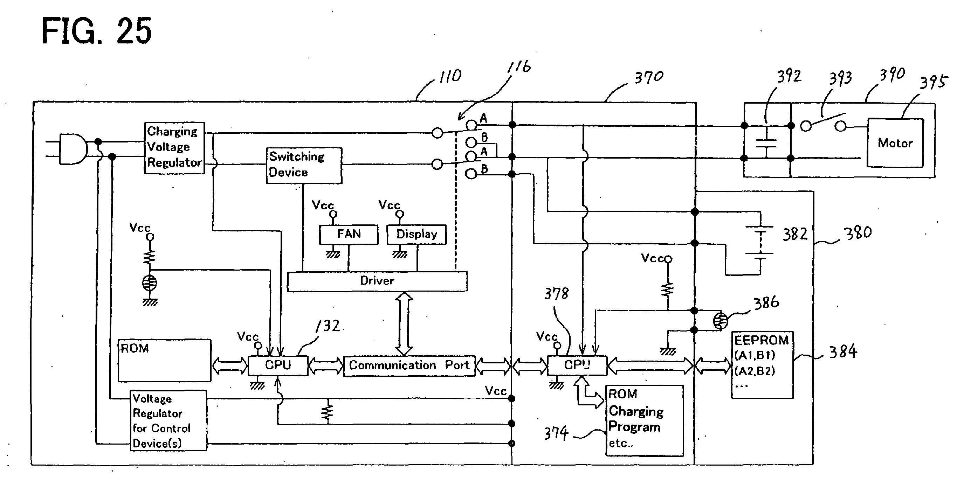

The example shown in Fig. 25, includes adapter 370. For example, adapter 370 supplies driving power to appliance 390 and charges battery pack 380. When the voltage of capacitor 392 has decreased, CPU 378 switches switch 116 of battery charger 110 to contacts A, thereby charging capacitor 392. Conversely, when the voltage of capacitor 392 has increased, CPU 378 switches switch 116 of battery charger 110 to contacts B, thereby charging battery pack 380.

In each case, charger 110 is controlled by a program that is stored in ROM 374. During the charging of battery pack 380, the parameters that are stored in EEPROM 384 are also utilized.

In this type of adapter, if battery charger 110 becomes hot, CPU 132 transmits an overheating signal to CPU 378. ROM 374 stores a program for decreasing the charging current upon the receipt of the overheating signal. This control process is incorporated in every case.

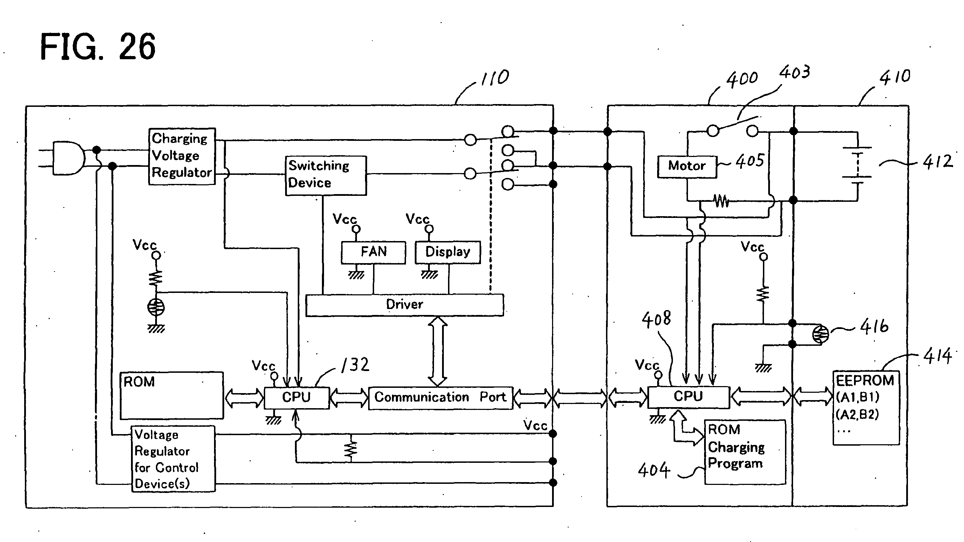

Fig. 26 illustrates an example of the usage of battery charger 110 that drives appliance 400 and, at the same time, charges battery pack 410, which is connected to appliance 400.

CPU 408 of appliance 400 controls charger 110 so that battery group 412 of battery pack 410 maintains a fully charged state. When motor 405 of appliance 400 is driven, charger 110 supplies some of the driving current and battery pack 410 makes up the deficiency.

If charger 110 is overheated, CPU 132 transmits an overheating signal to CPU 408. ROM 404 stores a program for decreasing the charging current upon the receipt of the overheating signal. If battery pack 410 is over-discharged and subjected to an abnormal temperature increase, CPU actuates a buzzer (not shown) in order to warn the user. Thus, the user will be informed of such an abnormal condition.

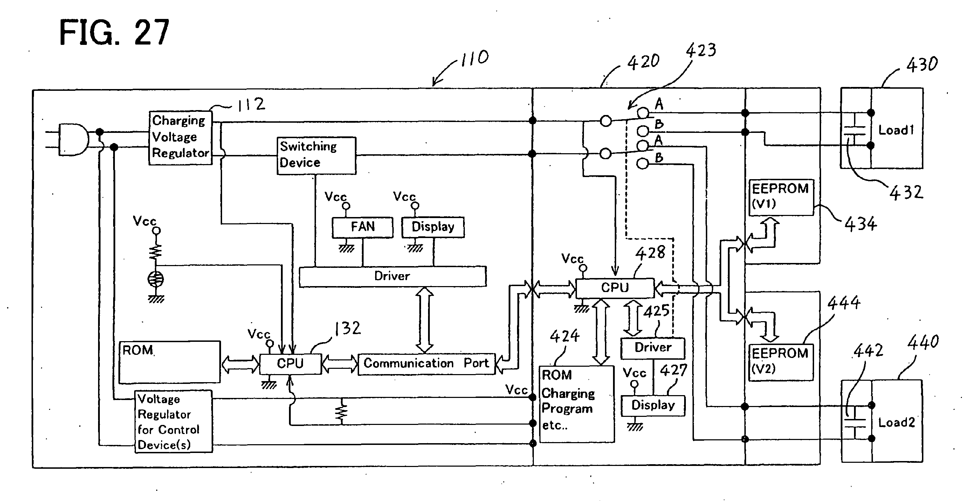

Fig. 27 illustrates an example of an adapter 420 that supplies driving currents to two appliances 430, 440 that have different specifications. Charging voltage regulator 112 adjusts the voltage to 12V or 9.6V using CPU 428 and CPU 132. In synchronization with the switching of the voltage, switch 423 switches between contacts A and contacts B. If 12V has been selected, contacts A are utilized in order to charge capacitor 432 of appliance 430, which is driven at 12V. Appliance 430 is driven using power stored in capacitor 432. If 9.6V has been selected, contacts B are utilized in order to charge capacitor 442 of appliance 440, which is driven at 9.6V. Appliance 440 is driven using power stored in capacitor 442. If each appliance 430, 440 is only infrequently used, charger 110 alternately charges capacitors 432, 442. Accordingly, when not in use, capacitors 432, 442 can accumulate power.

Adapter 420 is also capable of charging the battery pack of one appliance while supplying power to the other appliance.

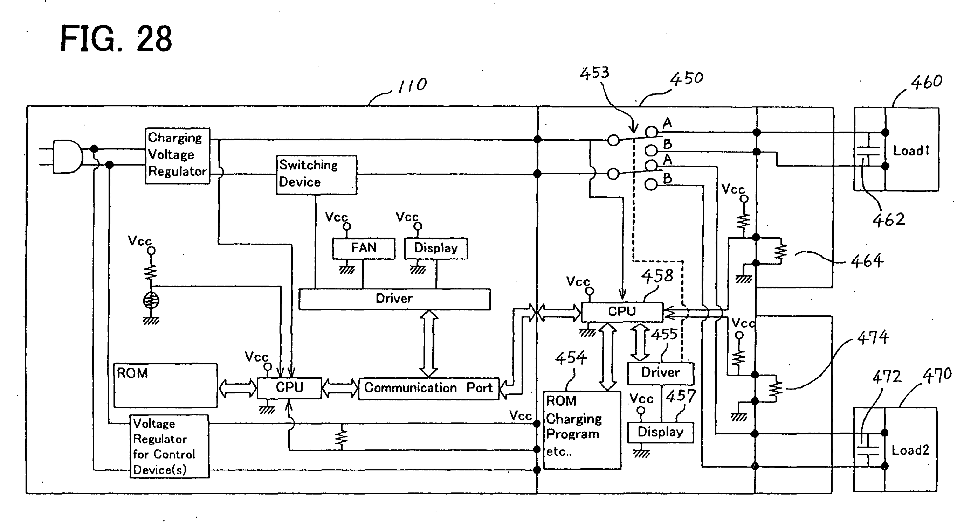

Fig. 28 illustrates examples of appliances 460, 470 each include respective analog ID resistors 464, 474. Adapter 450 inputs a voltage, which has been applied to each analog ID resistor 464, 474, and identifies the specification of the electronic device coupled to adapter 450. Thus, adapter 450 determines whether the coupled appliance is a 12V driven appliance or a 9.6V driven appliance. Other aspects are the same as those according to Fig. 27.

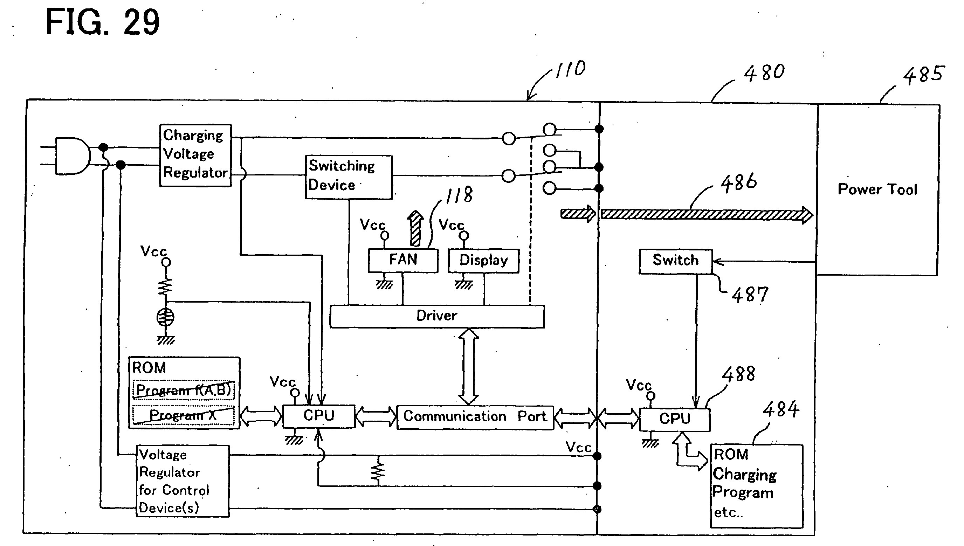

Fig. 29 illustrates an example of an adapter 480 that cools appliance 485, which may be a power tool. Adapter 480 includes cooling air duct 486, which receives a stream of cooling air from cooling fan 118 of battery charger 110 and conveys the stream of air to appliance 485. In particular, cooling duct 486 communicates the stream of cooling air to easily heated parts, such as a motor or an oil unit.

When appliance 485 is coupled to adapter 480, adapter 480 rotates cooling fan 118 while controlling battery charger 110.

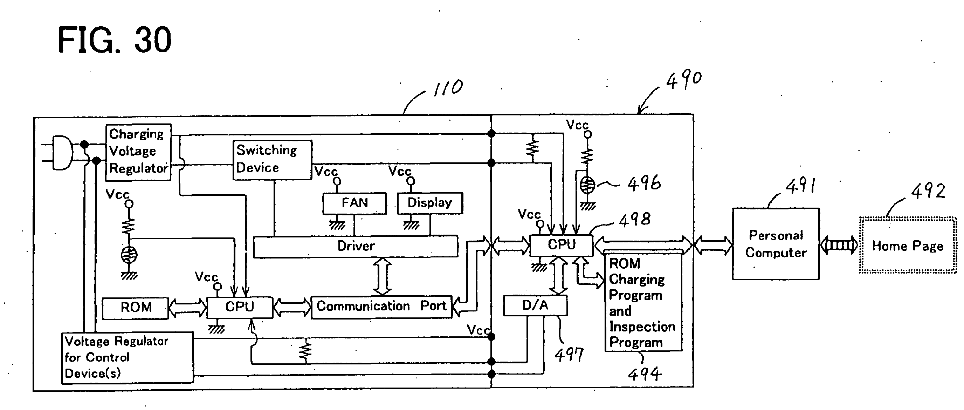

Fig. 30 illustrates an example of an adapter 490 that connects battery charger 110 to the Internet 492 via personal computer 491. In this case, an inspection program for the battery charger is transferred from the Internet, thereby enabling adapter 490 to check whether charger 110 is properly functioning or not. The inspection program may be downloaded from the Internet to ROM 494.

The result of inspection is recorded in personal computer 491. If a malfunction has been discovered, information concerning replacement parts is communicated via the Internet. The receiver of the information can deliver or order the necessary replacement parts.

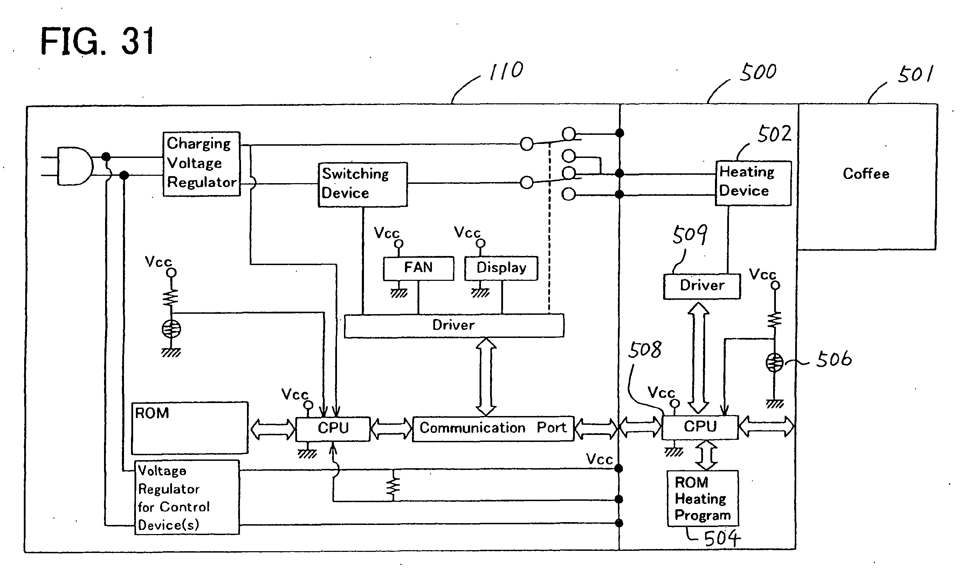

Fig. 31 illustrates an example of a charger 110 coupled to adapter 500 that can function to warm a canned drink. Adapter 500 includes heater 502. CPU 508 and driver circuit 509 control heater 502. ROM 504 stores a program that is utilized so that heater 502 is heated to an appropriate temperature. Driving power is supplied to heater 502 from charger 110. CPU 508 of adapter 500 controls the driving power.

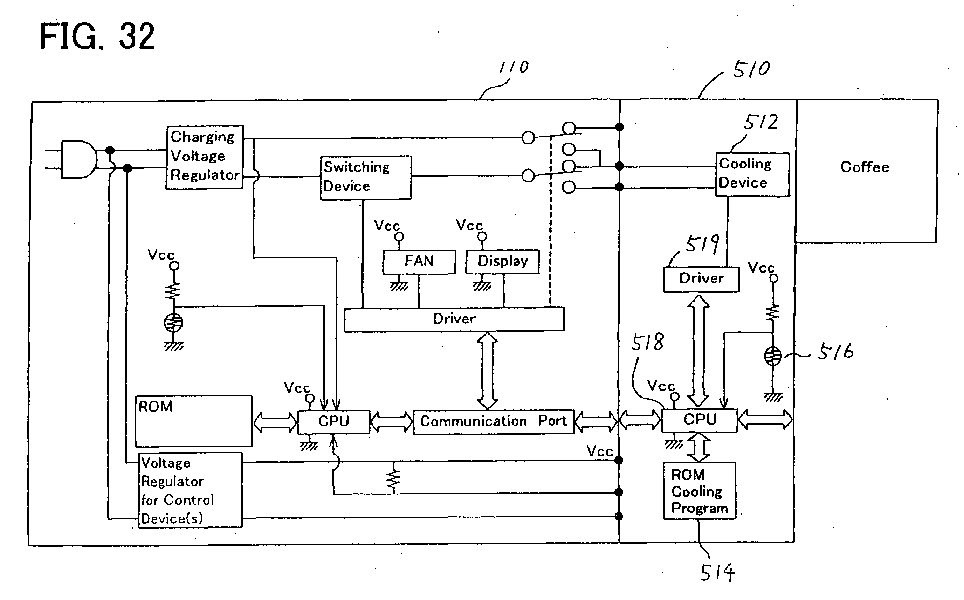

Fig. 32 illustrates an example of an adapter 510 coupled to battery charger 110 that can function to cool a canned drink. Adapter 510 includes cooling device 512, which may be a Peltier device. CPU 518 and driver circuit 519 control cooling device 512. ROM 514 stores a program that enables cooling device 512 to be cooled to an appropriate temperature. Driving power is supplied to cooling device 512 from charger 110. CPU 518 of adapter 510 controls the driving power.

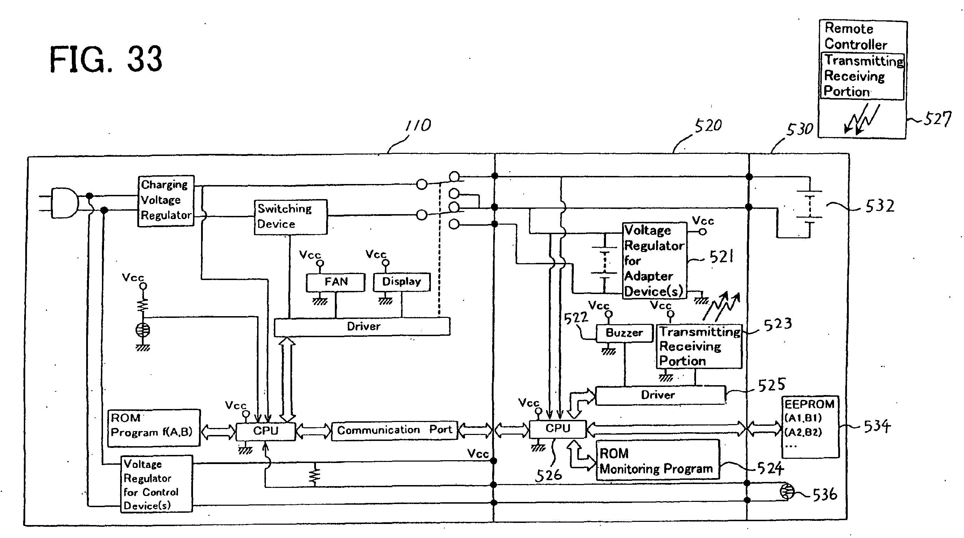

Fig. 33 illustrates an example of a battery pack 530 charged by battery charger 110 using adapter 520, which includes an anti-theft device. Recently, thefts of chargers and/or discharged batteries have been increasing. Therefore, this type of adapter 520 is very useful.

A user may physically carry remote controller 527. Adapter 520 includes transmitting/receiving portion 523, which transmits/receives signal to/from remote controller 527. As long as transmitting/receiving portion 523, which is close to the user, communicates with remote controller 527, CPU 526 determines that conditions are normal and buzzer 522 is not actuated. However, if transmitting/receiving portion 523 is not within a short distance from the user and, therefore, cannot communicate with remote controller 527, CPU 526 determines there is an abnormal condition and actuates buzzer 522. Due to the sound emitted by the buzzer, the user will notice that adapter 520 (and/or charger 110 and/or battery pack 530) has been removed without the user's consent. In addition, if battery pack 530 is disconnected from adapter 520, CPU 526 will actuate buzzer 522. Accordingly, theft of the battery pack can be prevented.

In addition to a buzzer that warns the user when an abnormal condition occurs, remote controller 527 also includes means for informing the user that battery pack 530 has been charged to the optimum level. The user can actuate buzzer 522 by operating remote controller 527. Therefore, if the user is uncertain about the location of battery charger 110, the user can easily find charger 110. Adapter 520 includes a backup power source (not shown). CPU 526 exerts control so that the backup power source is in a fully charged state at all times. In the alternative, a control voltage may be supplied to charger 110 from the fully-charged backup power source.

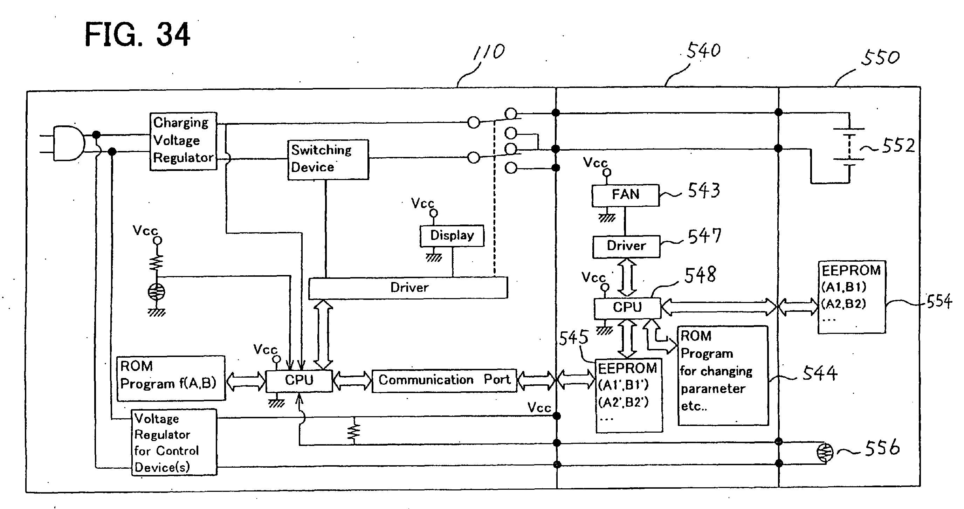

Fig. 34 illustrates an example of an adapter 540 for cooling battery charger 110, which does not include cooling fan 118. Instead, adapter 540 includes cooling fan 543 in order to cool charger 110 during a charging operation. If charger 110 is cooled during operation, a larger current may be utilized in order to enable rapid charging. The parameter stored in EEPROM 554 is set to a charging current that is permitted for a charger that does not have a cooling fan. However, this charging current may not be sufficient to enable rapid charging. The parameter value rewritten to a larger charging current value that is permitted for charger 110, which is cooled by cooling fan 543 during operation. The rewritten parameter is stored in EEPROM 545 and then transmitted to charger 110.

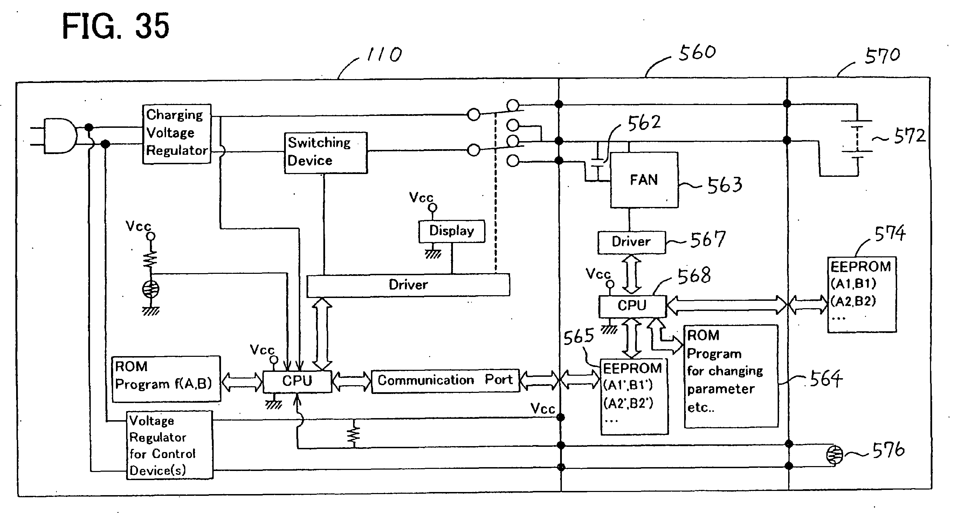

Fig. 35 illustrates an example of an adapter 560 including powerful cooling fan 563; thus, battery charger 110, which performs the charging operation, may be effectively cooled. Cooling fan 563 is strongly driven by the charging current that is supplied by charger 110.

The well cooled charger 110 causes a larger current to flow, thereby enabling rapid charging. In this case, the parameter value at which charger is cooled using a relatively small cooling fan of the charger, which parameter is stored in EEPROM 554, is rewritten to a value at which a calculation for the large current can be performed. The rewritten parameter is stored in EEPROM 565 and then transmitted to charger 110.

This type of adapter also can be effectively utilized for charger 110 that incorporates a cooling fan. In addition, battery pack 570 and capacitor 562, which is utilized for cooling fan 563, may be charged at the same time or may be alternately charged.

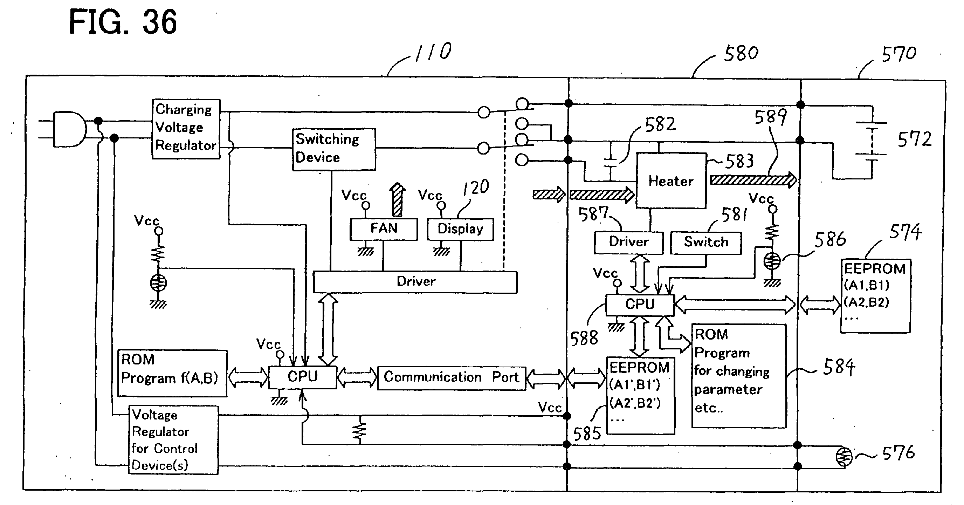

Fig. 36 illustrates an example of an adapter 580 that warms battery pack 570, the performance of which deteriorates in low temperature environments, in order to maintain battery pack 570 at an appropriate temperature before and after battery pack 570 is charged.

If the battery temperature detected by thermister 576 is low, heater 583 warms battery pack 570. When the battery temperature detected by thermister 576 has reached an appropriate temperature, the charging operation is initiated and heater 583 is stopped. Because battery pack 570 generates heat while being charged, heater 583 becomes unnecessary during the charging operation. If the temperature is extremely low, battery pack 570 is warmed by intermittently utilizing heater 583, when battery pack 570 is not being charged.

Because battery pack 570 is charged at the appropriate temperature, battery pack 570 can be quickly charged using a large charging current. Therefore, the parameter at which a calculation for the larger charging current is performed can be utilized. The rewritten parameter is stored in EEPROM 585 and then transmitted to charger 110.

If an abnormal condition is detected, CPU 588 transmits a signal to battery charger 110. Consequently, a visual indication of the abnormal condition is shown on display 120 of charger 110.

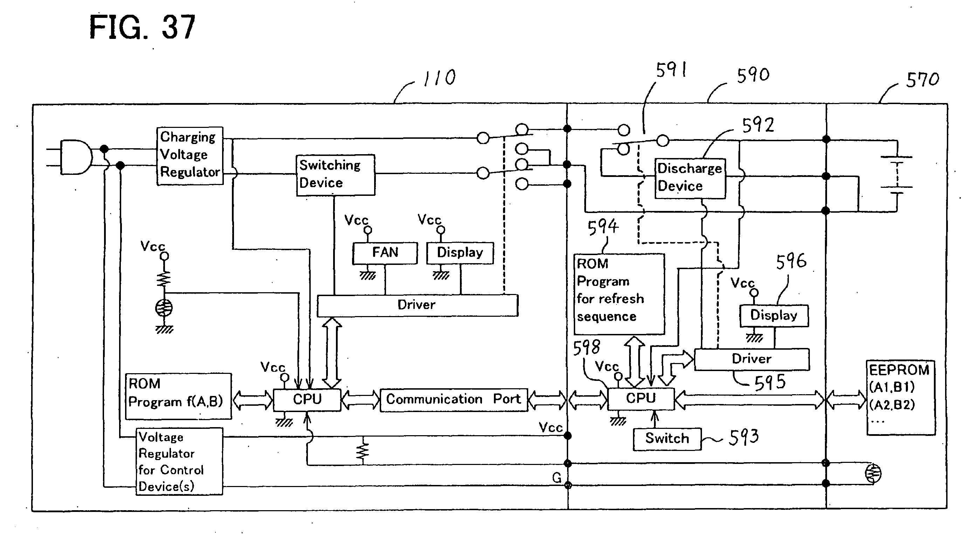

The example shown in Fig. 37 includes adapter 590 that refreshes battery pack 570 by alternately charging and discharging battery pack 570. By alternately charging and discharging battery pack 570, memory effects are eliminated. Therefore, battery pack 570 is refreshed.

Switch 593 is disposed on adapter 590. When the user actuates switch 593, battery pack 570 is alternately charged and discharged in accordance with the program stored in ROM 594. As a result, battery pack 570 is refreshed. Thus, when switch 591 is manipulated, the charging operation and the discharging operation are alternately performed.

This type of adapter 590 is capable of checking the battery memory of battery pack 570, updating data stored in the battery EEPROM, and displaying information, such whether auto-refreshing or refresh is recommended. In addition, the adapter can serve as a high quality battery-checker. For example, the adapter displays the remaining life of the battery, which is estimated based upon inspection of a temperature sensor, measurements of the battery internal resistance, and use history of the battery.

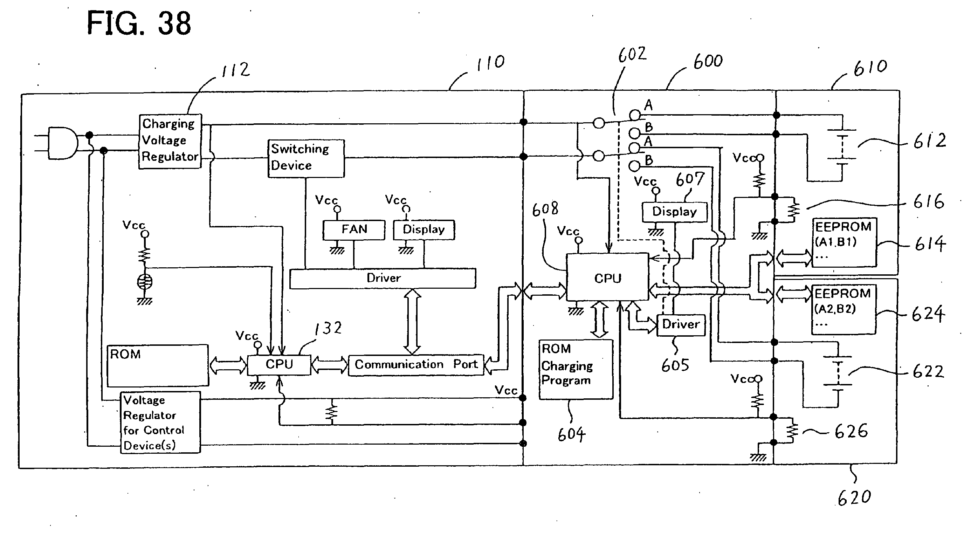

The example shown in Fig. 38 includes adapter 600 that supplies charging currents to two battery packs 610, 620 having different specifications, which is similar to the example shown in Fig. 27 and the example shown in Fig. 28. Charging voltage regulator 112 adjusts the voltage to, e.g., 12V or 9.6V, using CPU 608 and CPU 132. In synchronization with the switching of the voltage, switch 602 switches between contacts A and contacts B. If 12V has been selected, contacts A are utilized in order to charge 12V battery pack 610. If 9.6V has been selected, contacts B are utilized in order to charge 9.6V battery pack 620.

Switch 602 quickly alternates between contacts A and contacts B, thereby charging both battery packs 610, 620. If only one battery pack is coupled to the adapter or after one of the battery packs has been fully charged, the charging current is continuously supplied to the battery pack that still requires charging.

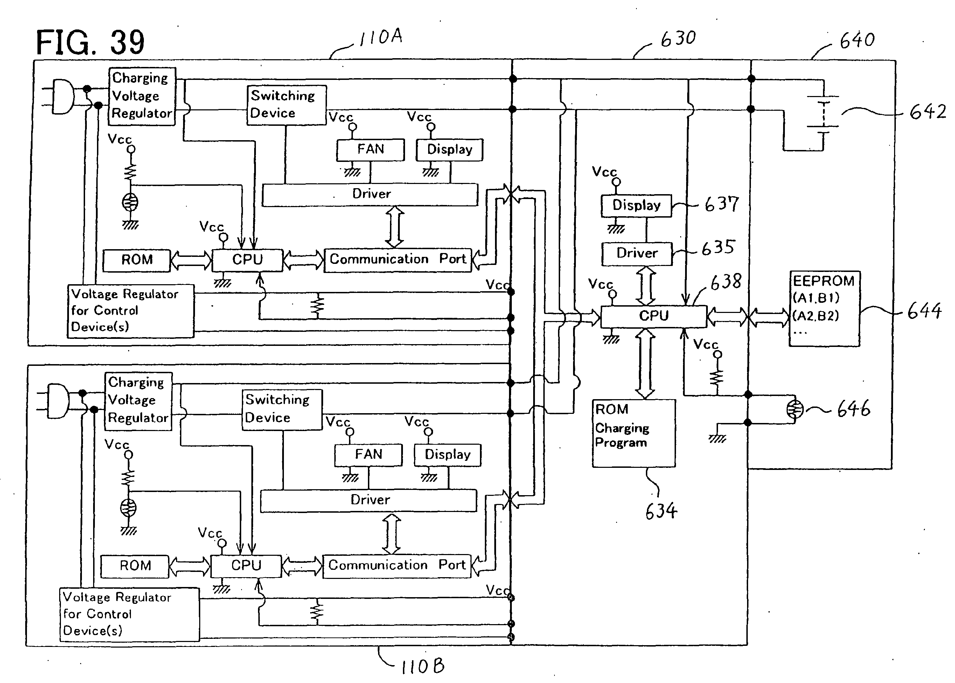

The example shown in Fig. 39 includes adapter 630 that charges battery pack 640 extremely quickly by utilizing two chargers 110A, 110B. CPU 638 transmits signals to two charger CPUs and utilizes the two chargers at their maximum capacity. As a result, battery pack 640 is charged extremely quickly.

CPU 638 calculates the value of the charging current for the extremely rapid charging operation and divides the current by two. CPU 638 controls each charger 110A, 110B so that the two separate currents are respectively supplied from chargers 110A, 110B.

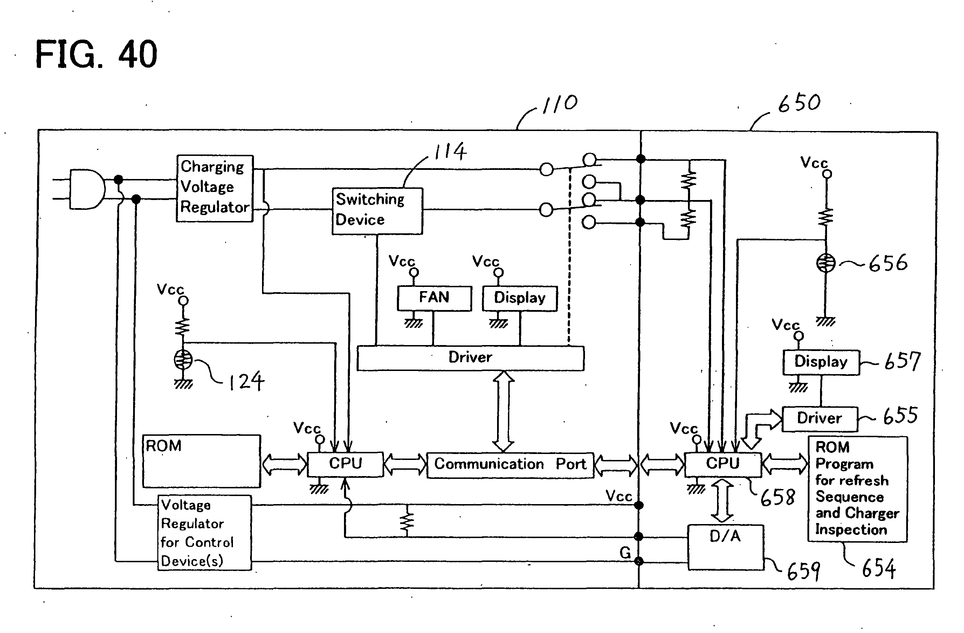

The example shown in Fig. 40, includes adapter 650 that inspects battery charger 110. ROM 654 stores a battery charger inspection program. CPU 658 operates in accordance with the inspection program, thereby determining whether circuit elements, such as switching device 114 and a relay, and a sensor element, such as thermister 124, are functioning properly or not. The inspection result is displayed on adapter 650.

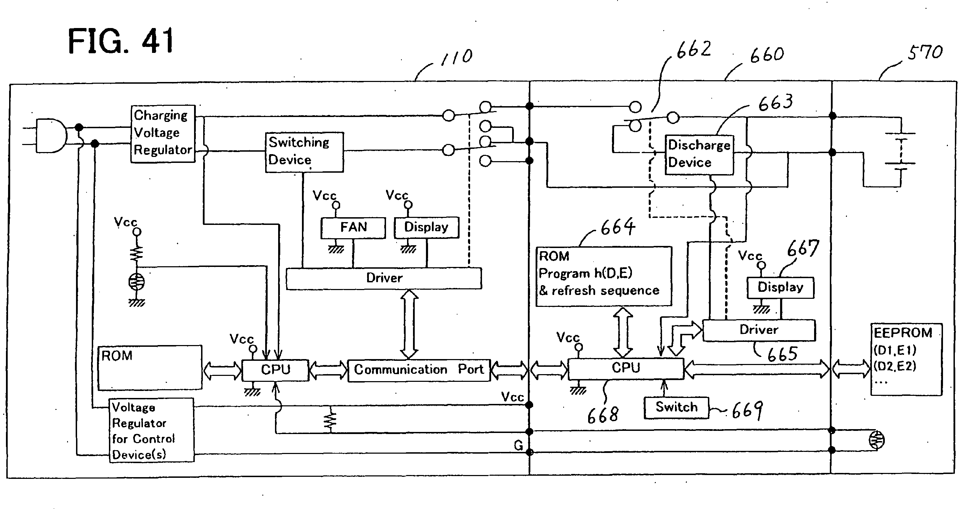

The example shown in Fig. 41 includes adapter 660 that refreshes battery pack 570 by alternately charging and discharging battery pack 570. By alternately charging and discharging of battery pack 570, memory effects are eliminated. Consequently, battery pack 570 is refreshed. The charging operation and the discharging operation can be alternately performed by switching switch 662.

As is clear from a comparison of Fig. 41 and Fig. 37, ROM 664 of adapter 660 stores a charging program and a refresh program, thereby enabling charger 110 to control battery pack 570 via adapter 590. Charger 110 can not directly control battery pack 570. Other aspects of this example are identical to the example shown in Fig. 37. When the user actuates switch 669, battery pack 570 is alternately charged and discharged in accordance with the program stored in ROM 664. Consequently, battery pack 570 is refreshed.

This type of adapter 660 is capable of checking the battery memory of battery pack 570, updating data stored in the battery EEPROM, and displaying information, such as whether auto-refreshing or refreshing is recommended. In addition, the adapter can serve as a high quality battery-checker. For example, the adapter displays the remaining life of the battery, which is estimated based upon an inspection of the temperature sensor, measurement of the battery internal resistance, and the use history of the battery.

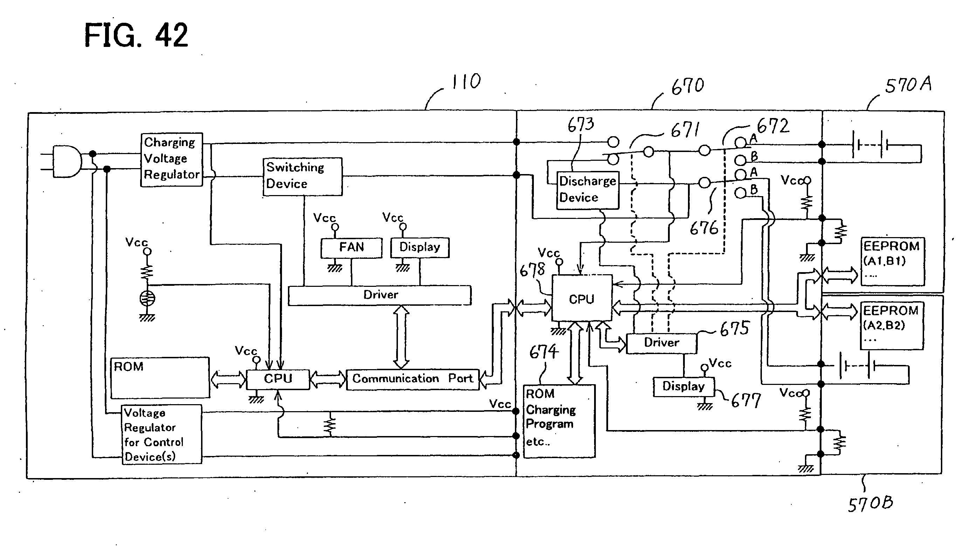

The example shown in Fig. 42 includes adapter 670 that refreshes two battery packs 570A, 570B in such a manner that each battery pack 570A, 570B is alternately charged and discharged. Switch 671 switches between the charging operation and the discharging operation. When switch 672 is switched to contacts A, battery pack 570A is refreshed. When switch 672 is switched to contacts B, battery pack 570B is refreshed.

Other aspects are the same as those according to Fig. 37. When one of the two battery packs is connected or after one of the two battery packs is refreshed, the refreshed process is continuously performed for the other battery pack that still requires refreshing.

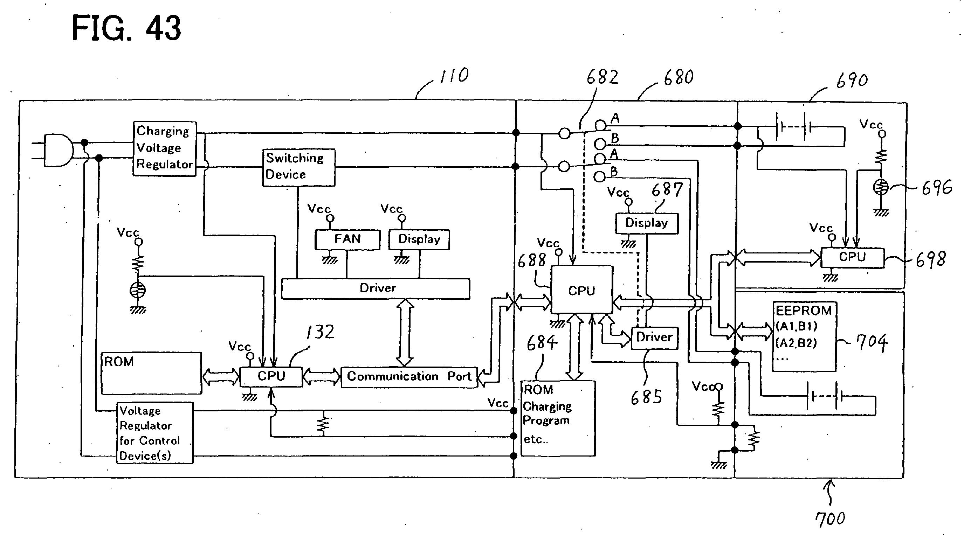

Fig. 43 illustrates an example of an adapter 680 that charges two battery packs 690, 700. Unlike the example shown in Fig. 38, in which battery pack 700 is designed to be charged by battery charger 110, battery pack 690 is not designed to be charged by battery charger 110. Battery pack 690 is a new type of battery pack and also is not designed to couple to adapter 680. In this case, CPU 698 contained within battery pack 690 controls charger 110. When switch 682 remains connected to contacts A, CPU 698 in battery pack 690 controls charger 110. On the other hand, when switch 682 remains connected to contacts B, CPU 132 contained in charger 110 controls charger 110. At this time, the parameters stored in battery pack 700 are read and utilized.

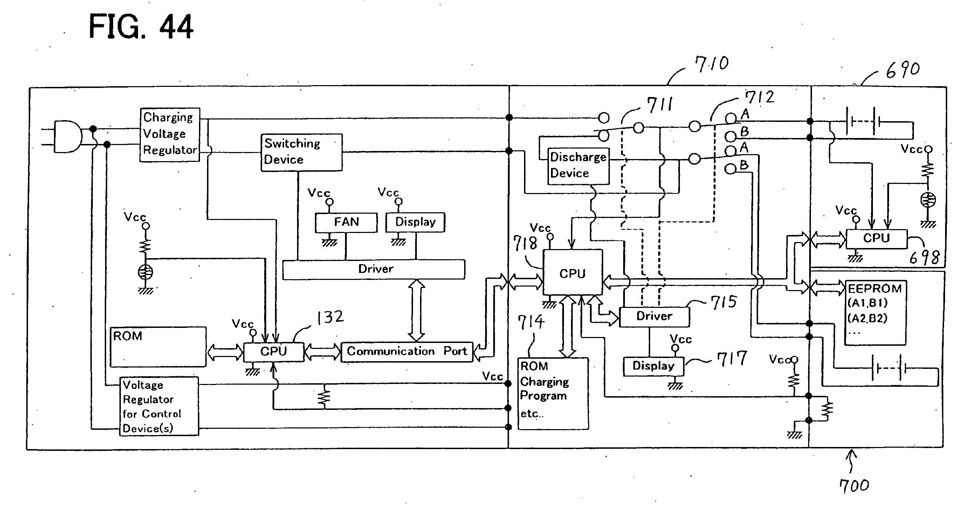

The example shown in Fig. 44 includes adapter 710 that refreshes two battery packs 690, 700 in such a manner that each battery pack 690, 700 is alternately charged and discharged. Unlike the thirty-second embodiment shown in Fig 42, in which battery pack 700 is designed to be charged by battery charger 110, battery pack 690 is not designed to be charged by battery charger 110. Battery pack 690 is a new type of battery pack and also is not designed to connect to adapter 710. In this case, CPU 698 contained in battery pack 690 controls charger 110. While switch 712 is connected to contacts A, CPU 698 in battery pack 690 controls charger 110. On the other hand, while switch 712 is connected to contacts B, CPU 132 contained in charger 110 controls charger 110. At this time, the parameters stored in battery pack 700 are read and utilized.

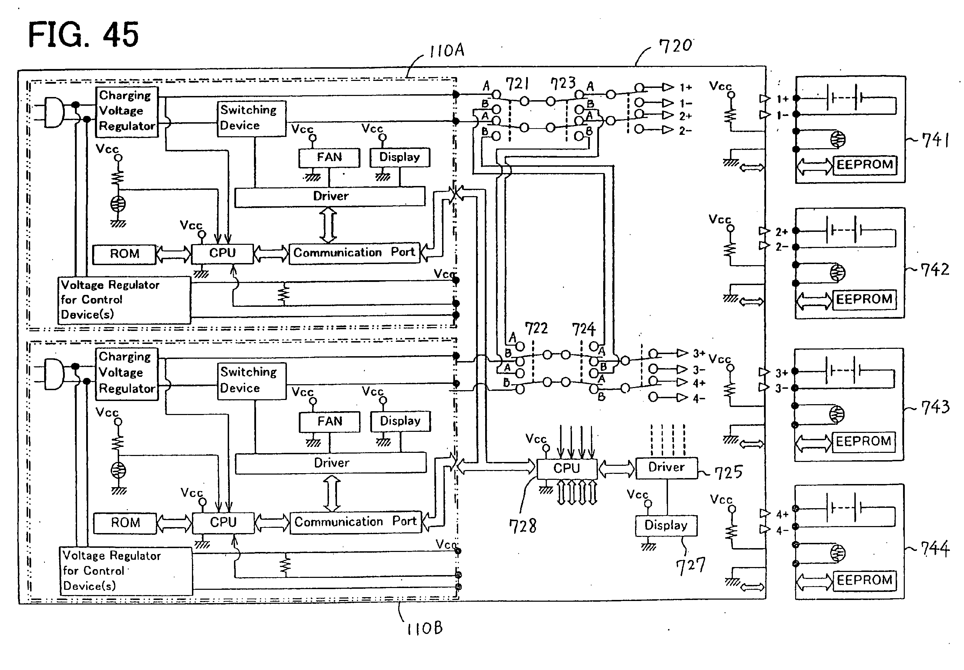

The example shown in Fig. 45 includes adapter 720 that enables two chargers 110A, 110B to charge four battery packs 741, 742, 743, 744.

In this case, only one CPU 728 is required in order to charge four battery packs 741, 742, 743, 744. Adapter 720 contains complicated switching groups. Normally, battery charger 110A charges battery backs 741, 742 at the same time, and battery charger 110B charges battery backs 743, 744 at the same time.

CPU 728 performs switching operations, thereby enabling charger 110B to simultaneously charge four battery packs 741, 742, 743, 744 in the event that charger 110A malfunctions, and enabling charger 110A to simultaneously charge four battery packs 741, 742, 743, 74, in the event that charger 110B malfunctions. The number of battery packs that can be coupled to adapter 720 may be equal to or more than four. In addition, the number of chargers that can be coupled to adapter 720 may be equal to or more than two.

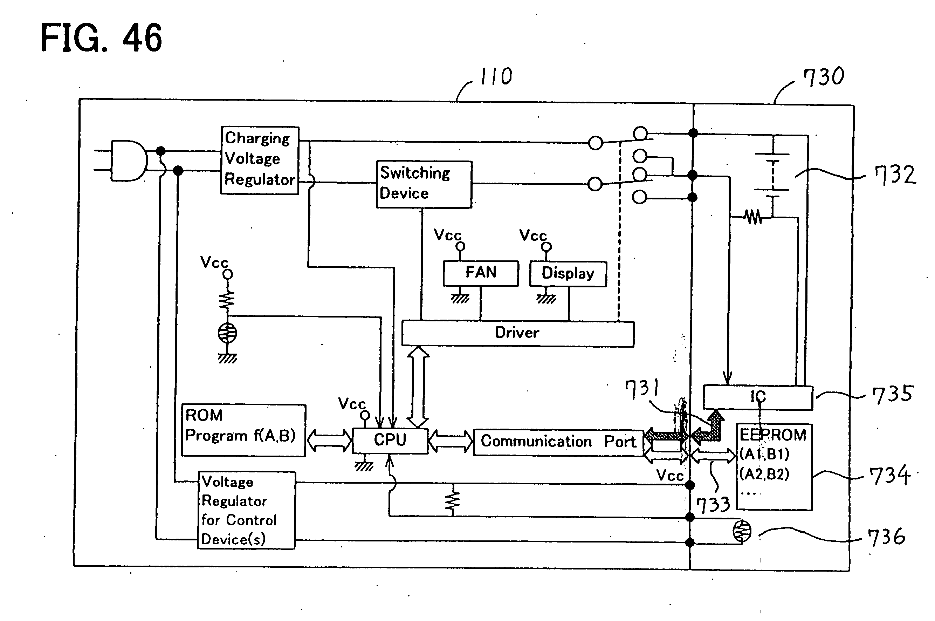

In the example of Fig. 46, negative-reference digital communication line 731 and ground-reference digital communication line 733 are provided between battery charger 110 and battery pack 730. By utilizing two types of digital communication lines 731, 733, communication with various CPUs and ROMs is enabled. Accordingly, communication with external devices can be better controlled.

## Claims

1. An adapter (30) for receiving charging power from a battery charger (10) and for supplying driving power to an appliance (70), comprising:
an appliance-side adapter (45) comprising a pair of engaging portions for engaging with corresponding engaging portions (75) of the appliance and a capacitor (C) for storing the charging power supplied by the battery charger (10) and for supplying the driving power to the appliance (70),
a charger-side adapter (40) being separate from the appliance-side adapter (45) comprising an engaging portion (32) for engaging with a corresponding engaging portion (12) of the battery charger and a controller (41) adapted to control a charging current and a charging voltage or a charging voltage supplied by the battery charger, and
a power line (44) electrically coupling the charger-side adapter (40) to the capacitor (C) of the appliance-side adapter for supplying the charging power from the battery charger (10) to the capacitor (C) of the appliance-side adapter (45).

2. An adapter (30) as in claim 1, wherein the charger-side adapter (40) contains a memory that stores a program executable by a CPU (26) of the battery charger (10).

3. An adapter (30) as in any preceding claim, wherein the controller (41) is programmed to stop the supply of charging power from the battery charger (10) to the adaptor (30) when the capacitor (C) is fully charged or when the appliance (70) is disengaged from the appliance-side adapter (45).

4. An adapter (30) as in any preceding claim, wherein the controller (41) is programmed to:
initiate communication with a control portion (26) of the battery charger (10) and receive charging parameters of the battery charger (30) including the maximum output current of the battery charger (10) when the adapter (30) is connected to the battery charger (10).

5. An adapter (30) as in claim 4, wherein the controller (41) is programmed to:
detect connection of the appliance-side adapter (45) to the appliance (70),
determine the current value that will be supplied to the capacitor (C), and
transmit instructions to the control portion (26) of the battery charger (10) relating to the selected current value to be supplied to the capacitor (C) by the battery charger (10).

6. An adapter (30) as in any preceding claim, wherein the engaging portions of the appliance-side adapter (45) are constructed to be mountable on a battery pack mounting portion (75) of the appliance (70).

7. An adapter (30) as in any preceding claim, wherein the adapter (30) is adapted for reading parameters stored in the battery charger (10).

8. Use of the adapter (30) as defined in any preceding claim, wherein:
a charging current supplied from the battery charger (10) is continuously received by the appliance-side adapter (45) via the power line (44)
the received charging current is stored in the capacitor (C) and
a driving current is intermittently supplied from the capacitor (C) to the appliance (70) to drive the appliance (70) by using the charging current supplied by the battery charger (10) and stored in the capacitor (C) the charging current being less than the driving current.

9. Use of the adapter (30) as defined in any preceding claim for supplying power to an appliance (70) selected from a cordless power drill, cordless power screwdriver or cordless power saw.

## Patentansprüche

1. Adapter (30) zum Empfangen einer Ladeleistung von einem Batterieladegerät (10) und zum Liefern von Antriebsleistung an eine Vorrichtung (70), enthaltend:
einen vorrichtungsseitigen Adapter (45), der ein Paar von Eingriffsbereichen enthält zum Eingreifen in entsprechende Eingriffsbereiche (75) der Vorrichtung, und einen Kondensator (C) zum Speichern der Ladeleistung, die von dem Batterieladegerät (10) geliefert wird, und zum Liefern der Antriebsleistung an die Vorrichtung (70),
einen ladegerätseitigen Adapter (40), der von dem vorrichtungsseitigen Adapter (45) separat ist, enthaltend einen Eingriffsbereich (32) zum Eingreifen in einen entsprechenden Eingriffsbereich (12) des Batterieladegeräts, und eine Steuerung (41), die angepasst ist zum Steuern eines Ladestroms und einer Ladespannung oder einer Ladespannung, die von dem Batterieladegerät geliefert werden, und
eine Stromleitung (44), die den ladegerätseitigen Adapter (40) mit dem Kondensator (C) des vorrichtungsseitigen Adapters elektrisch koppelt zum Liefern der Ladeleistung von dem Batterieladegerät (10) an den Kondensator (C) des vorrichtungsseitigen Adapters (45).

2. Adapter (30) nach Anspruch 1, bei dem der ladegerätseitige Adapter (40) einen Speicher enthält, der ein Programm speichert, das durch eine CPU (26) des Batterieladegeräts (10) ausführbar ist.

3. Adapater (30) nach einem der vorangegangenen Ansprüche, bei dem die Steuerung (41) programmiert ist zum Stoppen der Lieferung der Ladeleistung von dem Batterieladegerät (10) an den Adapter (30), wenn der Kondensator (C) vollständig geladen ist, oder wenn die Vorrichtung (70) von dem vorrichtungsseitigen Adapter (45) gelöst ist.

4. Adapter (30) nach einem der vorangegangenen Ansprüche, bei dem die Steuerung (41) programmiert ist zum:
Starten einer Kommunikation mit einem Steuerbereich (26) des Batterieladegeräts (10) und Empfangen von Ladeparametem des Batterieladegeräts (30), die den maximalen Ausgangsstrom des Batterieladegeräts (10) enthalten, wenn der Adapter (30) mit dem Batterieladegerät (10) verbunden ist.

5. Adapter (30) nach Anspruch 4, bei dem die Steuerung (41) programmiert ist zum:
Detektieren einer Verbindung des vorrichtungsseitigen Adapters (45) mit der Vorrichtung (70),
Bestimmen des Stromwerts, der an den Kondensator (C) geliefert wird, und
Senden von Befehlen an den Steuerungsbereich (26) des Batterieladegeräts (10) betreffend den ausgewählten Stromwert, der von dem Batterieladegerät (10) an den Kondensator (C) zu liefern ist.

6. Adapter (30) nach einem der vorangegangenen Ansprüche, bei dem die Eingriffsbereiche des vorrichtungsseitigen Adapters (45) aufgebaut sind, um an einem Batteriepackmontagebereich (75) der Vorrichtung (70) montierbar zu sein.

7. Adapter (30) nach einem der vorangegangenen Ansprüche, bei dem der Adapter (30) angepasst ist zum Lesen von Parametern, die in dem Batterieladegerät (10) gespeichert sind.

8. Verwendung des Adapters (30), wie er in einem der vorangegangenen Ansprüche definiert ist, wobei:
der Ladestrom, der von dem Batterieladegerät (10) geliefert wird, kontinuierlich von dem vorrichtungsseitigen Adapter (45) über die Stromleitung (44) empfangen wird,
der empfangene Ladestrom in dem Kondensator (C) gespeichert wird, und
ein Antriebsstrom mit Unterbrechung von dem Kondensator (C) an die Vorrichtung (70) geliefert wird, um die Vorrichtung (70) anzutreiben, indem der Ladestrom verwendet wird, der von dem Batterieladegerät (10) geliefert wird und in dem Kondensator (C) gespeichert ist, wobei der Ladestrom kleiner als der Antriebsstrom ist.

9. Verwendung des Adapters (30), wie er in einem der vorangegangenen Ansprüche definiert ist, zum Liefern von Leistung an eine Vorrichtung (70), die ausgewählt ist aus einer kabellosen elektrischen Bohrmaschine, einem kabellosen elektrischen Schraubendreher oder einer kabellosen elektrischen Säge.

## Revendications

1. Adaptateur (30) pour recevoir de la puissance de chargement provenant d'un chargeur de batterie (10) et pour alimenter en puissance pilote un appareil (70), comprenant :
un adaptateur côté appareil (45) comprenant une paire de portions d'enclenchement pour un enclenchement avec des portions d'enclenchement correspondantes (75) de l'appareil et un condensateur (C) pour stocker la puissance de chargement fournie par le chargeur de batterie (10) et pour alimenter en puissance de chargement l'appareil (70),
un adaptateur côté chargeur (40) séparé de l'adaptateur côté appareil (45) comprenant une portion d'enclenchement (32) pour un enclenchement avec une portion d'enclenchement correspondante (12) du chargeur de batterie et un régulateur (41) adapté pour réguler un courant de chargement et une tension de chargement ou une tension de chargement fournie par le chargeur de batterie, et
une ligne électrique (44) couplant électriquement l'adaptateur côté chargeur (40) au condensateur (C) de l'adaptateur côté appareil pour alimenter en puissance de chargement provenant du chargeur de batterie (10) le condensateur (C) de l'adaptateur côté appareil (45).

2. Adaptateur (30) selon la revendication 1, dans lequel l'adaptateur côté chargeur (40) contient une mémoire qui stocke un programme exécutable par une unité centrale (26) du chargeur de batterie (10).

3. Adaptateur (30) selon l'une quelconque des revendications précédentes, dans lequel le régulateur (41) est programmé pour arrêter l'alimentation en puissance de chargement provenant du chargeur de batterie (10) de l'adaptateur (30) lorsque le condensateur (C) est entièrement chargé ou lorsque l'appareil (70) est désenclenché de l'adaptateur côté appareil (45).

4. Adaptateur (30) selon l'une quelconque des revendications précédentes, dans lequel le régulateur (41) est programmé pour :
démarrer la communication avec une portion de régulation (26) du chargeur de batterie (10) et recevoir des paramètres de chargement du chargeur de batterie (30) comprenant le courant de sortie maximal du chargeur de batterie (10) lorsque l'adaptateur (30) est connecté au chargeur de batterie (10).

5. Adaptateur (30) selon la revendication 4, dans lequel le régulateur (41) est programmé pour :
détecter une connexion de l'adaptateur côté appareil (45) à l'appareil (70),
déterminer la valeur de courant qui sera fournie au condensateur (C), et
transmettre des instructions à la portion de régulation (26) du chargeur de batterie (10) relatif à la valeur de courant sélectionnée devant être fournie au condensateur (C) par le chargeur de batterie (10).

6. Adaptateur (30) selon l'une quelconque des revendications précédentes, dans lequel les portions d'enclenchement de l'adaptateur côté appareil (45) sont construites pour pouvoir être montées sur une portion de montage de bloc-batterie (75) de l'appareil (70).

7. Adaptateur (30) selon l'une quelconque des revendications précédentes, dans lequel l'adaptateur (30) est adapté pour lire des paramètres stockés dans le chargeur de batterie (10).

8. Utilisation de l'adaptateur (30) tel que défini dans l'une quelconque des revendications précédentes, dans laquelle :
un courant de chargement fourni par le chargeur de batterie (10) est reçu en continu par l'adaptateur côté appareil (45) via la ligne électrique (44) le courant de chargement reçu est stocké dans le condensateur (C) et
un courant-pilote est fourni de façon intermittente du condensateur (C) à l'appareil (70) afin de piloter l'appareil (70) en utilisant le courant de chargement fourni par le chargeur de batterie (10) et stocké dans le condensateur (C), le courant de chargement étant inférieur au courant pilote.

9. Utilisation d'un adaptateur (30) tel que défini dans l'une quelconque des revendications précédentes pour alimenter en puissance un appareil (70) choisi parmi une perceuse sans fil, une visseuse électrique sans fil ou une scie électrique sans fil.
